(19) Europäisches Patentamt
European Patent Office
Office européen des brevets

(11) **EP 1 765 020 A1**

(12) **EUROPEAN PATENT APPLICATION**
published in accordance with Art. 158(3) EPC

(43) Date of publication:
**21.03.2007 Bulletin 2007/12**

(51) Int Cl.:
**H04N 7/36** (2006.01)

(21) Application number: **05727896.2**

(22) Date of filing: **29.03.2005**

(86) International application number:
**PCT/JP2005/005941**

(87) International publication number:
**WO 2005/122593 (22.12.2005 Gazette 2005/51)**

(84) Designated Contracting States:
**AT BE BG CH CY CZ DE DK EE ES FI FR GB GR HU IE IS IT LI LT LU MC NL PL PT RO SE SI SK TR**

(30) Priority: **14.06.2004 JP 2004175979**

(71) Applicant: **Monolith Co., Ltd.**
**Tokyo 106-0045 (JP)**

(72) Inventors:
• **YAMASHITA, Shinichi**
**Minato-ku**
**Tokyo 1060045 (JP)**

• **ENDO, Masuharu**
**Minato-ku**
**Tokyo 1060045 (JP)**
• **AKIYOSHI, Kozo**
**Minato-ku**
**Tokyo 1060045 (JP)**
• **AKIYOSHI, Nobuo**
**Minato-ku**
**Tokyo 1060045 (JP)**

(74) Representative: **Schröer, Gernot H. et al**
**Meissner, Bolte & Partner GbR**
**Bankgasse 3**
**90402 Nürnberg (DE)**

(54) **MOVING PICTURE ENCODING METHOD AND MOVING PICTURE DECODING METHOD**

(57) When a moving picture is encoded with a high compression ratio by the MPEG, the block noise becomes remarkable. Matching is calculated between the first and the second key frame (F0, F4) and corresponding point information (M0-4) is generated. According to this corresponding point information, a virtual second key frame (F4') is generated. A difference between the actual second key frame (F4) and the virtual second key frame (F4') is compressed/encoded by a difference encoder DE. The F0, MO-4, and the compressed/encoded difference Δ4 are outputted as encoded data between the key frame F0 and F4.

**Fig.19**

EP 1 765 020 A1

**Description**

**TECHNICAL FIELD**

This invention relates to image processing technique, especially to motion image encoding and decoding method employing image matching.

**BACKGROUND TECHNOLOGY**

MPEG (Motion Picture Experts Group) is one of the standard technologies for motion image compression. MPEG employs block matching in which block search is conducted in such a manner as minimizes the difference between the blocks. In MPEG, points, which actually correspond to each other between frames, are not always associated with, although the difference between the frames may become minimal.

In MPEG, so-called "block noise" is problematic when the compression ratio is high. It is thus necessary to adopt a method which is not dependent on block matching in order to reduce the noise and to improve the compression ratio utilizing the coherency between frames. The technique to be sought should encode the frames so that image regions and/or points, which actually correspond to each other, are correctly associated with each other. Preferably, the technique should avoid simple block matching.

**DISCLOSURE OF THE INVENTION**

It is thus an object of the present invention to provide motion image encoding and decoding technique which can solve the above problem. The present invention utilizes image matching, which can employ the technique (hereinafter referred to as "Base Technology") which the present applicant proposed and which has been patented as a Japanese patent No. 2927350.

Motion image encoding according to the present invention conducts the following steps.

a) generating corresponding point information between the first and the second key frames which have at least one image frame in-between, by calculating matching between the first and the second frames,
b) generating a virtual second frame shifting points in the first key frame using the corresponding point information,
c) encoding compressing the difference data between the actual second and the virtual second key frames, and
d) outputting, as encoded date between the first and the second key frames, the first key frame, the corresponding point information and the encoded compressed difference data between the actual second and the virtual second key frames.

Motion image decoding according to the present invention conducts the following steps.

k) obtaining the first key frame and corresponding point information between the first and the second key frames which have at least one image frame in-between,
1) generating a virtual second frame shifting points in the first key frame using the corresponding point information,
m) obtaining, from an encoding side, encoded compressed difference data between the actual second and the virtual second key frames
o) generating an improved virtual second key frame using the obtained encoded compressed difference data and the virtual second key frame,
p) generating at least one intermediate frame which should exist between the first and the second key frames interpolating the first key frame and the improved second key frame using the corresponding point information, and
q) outputting, as decoded data between the first and the second key frames, the first key frame, the generated intermediate frame and the improved second key frame.

Motion encoding according to the present invention may further comprise evaluating the accuracy of the matching conducted In the step a) above and switching the encoding scheme of the step c) above. The evaluation may consider the matching energy between the key frames. The matching energy may be the value calculated in Base Technology on the basis of the distance and the difference in pixel values between points.

Another aspect of the present invention is a motion encoding method. The method encodes at least the third key frame using the result of an image region-based matching calculated between the first and the second frames. The methods comprise judging on a region by region basis the accuracy of the matching and selecting, during the encoding of the third key frame, on a region by region basis a quantization scheme referring to the judged matching accuracy.

The present invention naturally includes inventions gained by re-ordering the above steps, replacing partially or entirely the expression of the invention between apparatus and method, altering the expression to a computer program or a data medium.

**BRIEF DESCRIPTION OF THE DRAWINGS**

Fig. 1a is an image obtained as a result of the application of an averaging filter to a human facial image.
Fig. 1b is an image obtained as a result of the application of an averaging filter to another human facial image.
Fig. 1c is an image of a human face at $p^{(5,0)}$ obtained in a preferred embodiment in the base technology.
Fig. 1d is another image of a human face at $p^{(5,0)}$ obtained in a preferred embodiment in the base technology.
Fig. 1e is an image of a human face at $p^{(5,1)}$ obtained in a preferred embodiment in the base technology.
Fig. 1f is another image of a human face at $p^{(5,1)}$ obtained in a preferred embodiment in the base technology.
Fig. 1g is an image of a human face at $p^{(5,2)}$ obtained in a preferred embodiment in the base technology.
Fig. 1h is another image of a human face at $p^{(5,2)}$ obtained in a preferred embodiment in the base technology.
Fig. 1i is an image of a human face at $p^{(5,3)}$ obtained in a preferred embodiment in the base technology.
Fig. 1j is another image of a human face at $p^{(5,3)}$ obtained in a preferred embodiment in the base technology.
Fig. 2R shows an original quadrilateral.

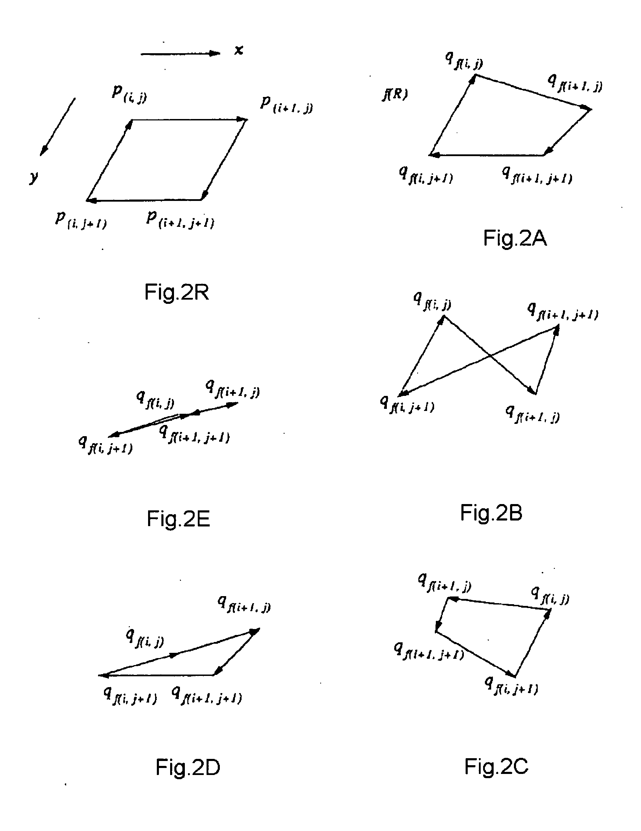

Fig. 2A shows an inherited quadrilateral.
Fig. 2B shows an inherited quadrilateral.
Fig. 2C shows an inherited quadrilateral.
Fig. 2D shows an inherited quadrilateral.
Fig. 2E shows an inherited quadrilateral.

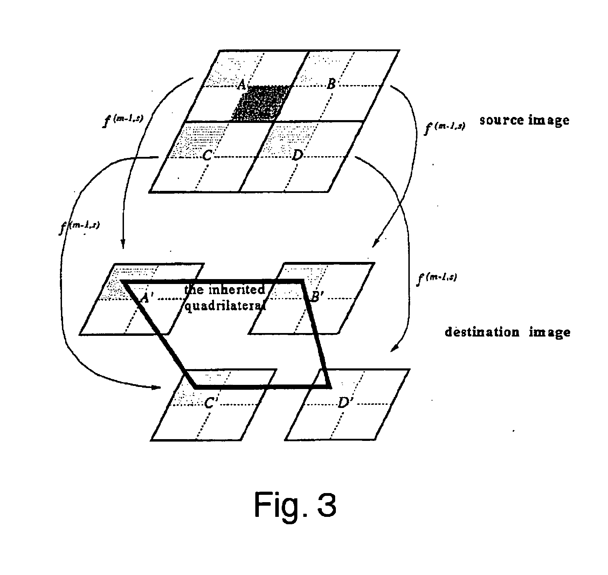

Fig. 3 is a diagram showing the relationship between a source image and a destination image and that between the m-th level and the (m-1)th level, using a quadrilateral.

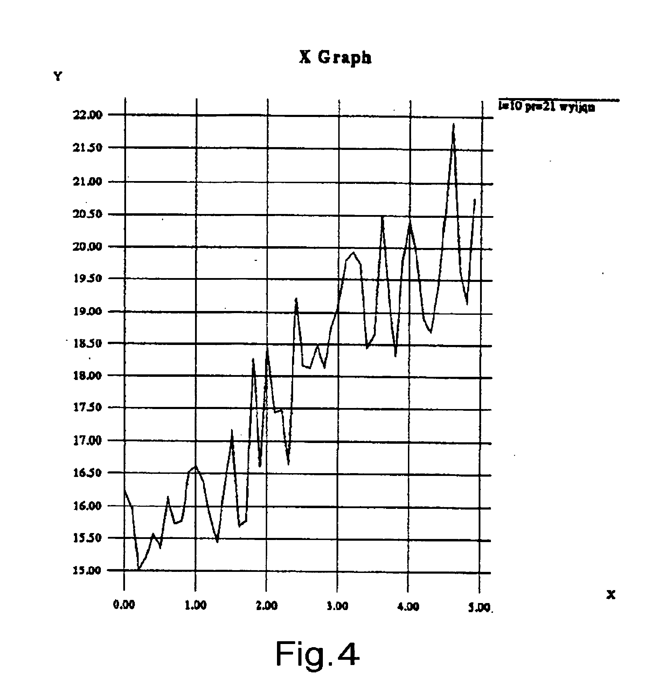

Fig. 4 shows the relationship between a parameter $\eta$ (represented by x-axis) and energy $C_f$ (represented by y-axis).

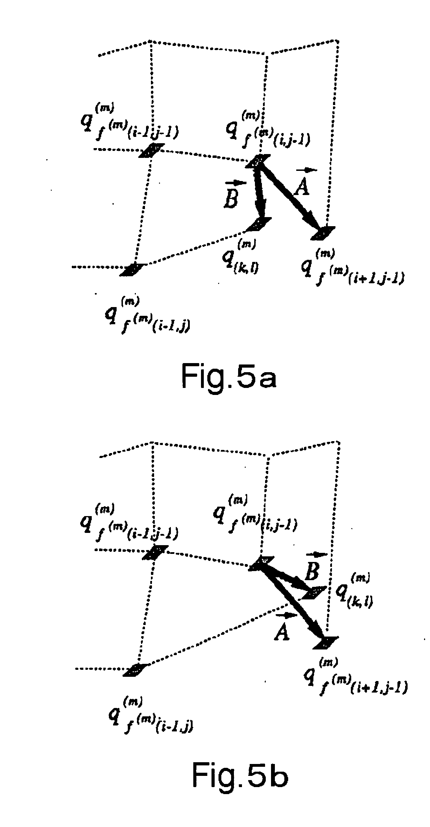

Fig. 5a is a diagram illustrating determination of whether or not the mapping for a certain point satisfies the bijectivity condition through the outer product computation.
Fig. 5b is a diagram illustrating determination of whether or not the mapping for a certain point satisfies the bijectivity condition through the outer product computation.

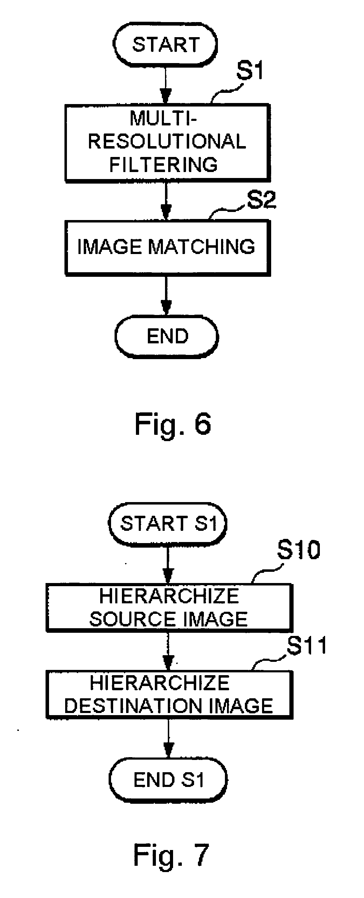

Fig. 6 is a flowchart of the entire procedure of a preferred embodiment in the base technology.
Fig. 7 is a flowchart showing the details of the process at S1 in Fig. 6.

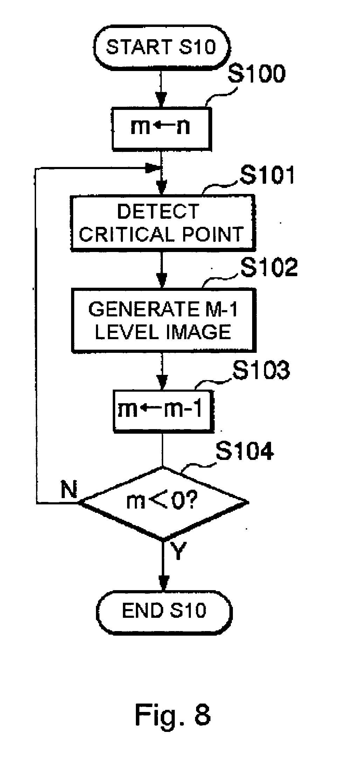

Fig. 8 is a flowchart showing the details of the process at S10 in Fig. 7.

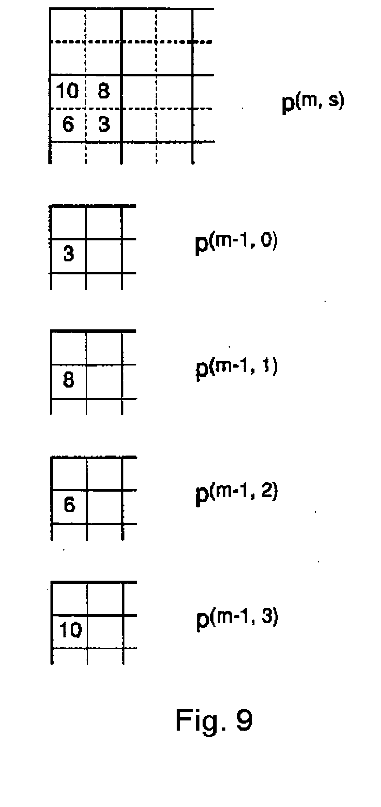

Fig. 9 is a diagram showing correspondence between partial images of the m-th and (m-1)th levels of resolution.

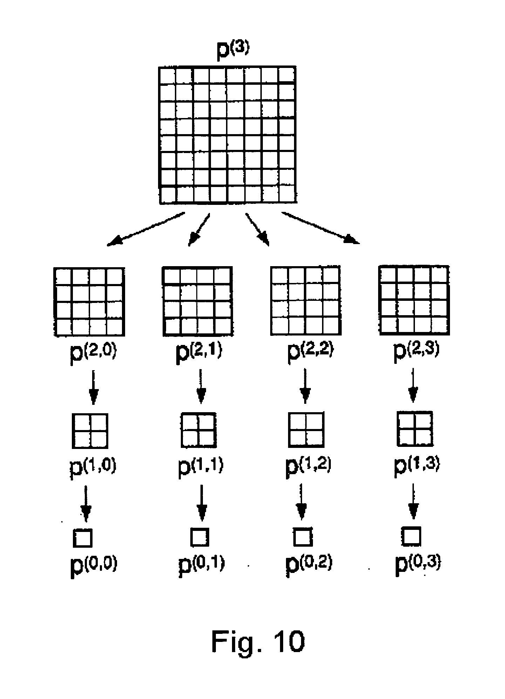

Fig. 10 is a diagram showing source hierarchical images generated in the embodiment in the base technology.

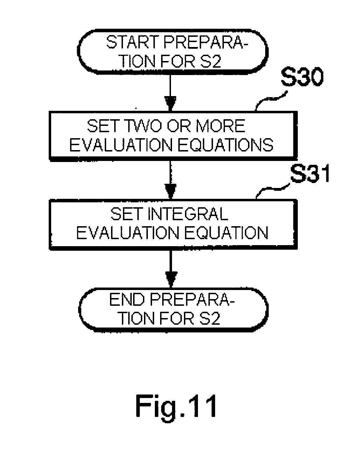

Fig. 11 is a flowchart of a preparation procedure for S2 in Fig. 6.

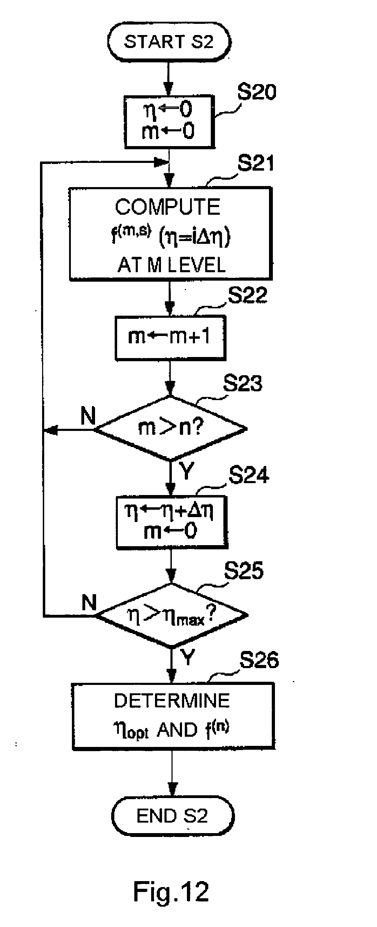

Fig. 12 is a flowchart showing the details of the process at S2 in Fig. 6.

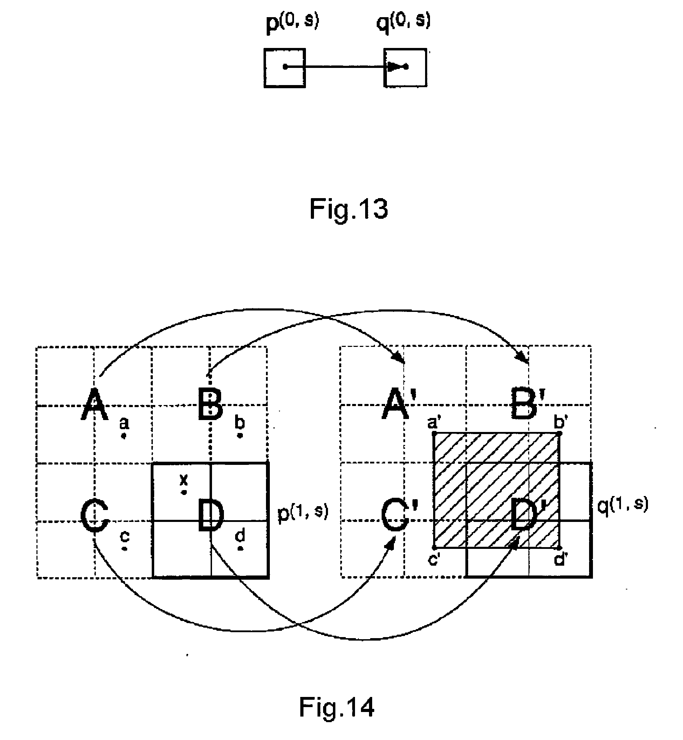

Fig. 13 is a diagram showing the way a submapping is determined at the 0-th level.
Fig. 14 is a diagram showing the way a submapping is determined at the first level.

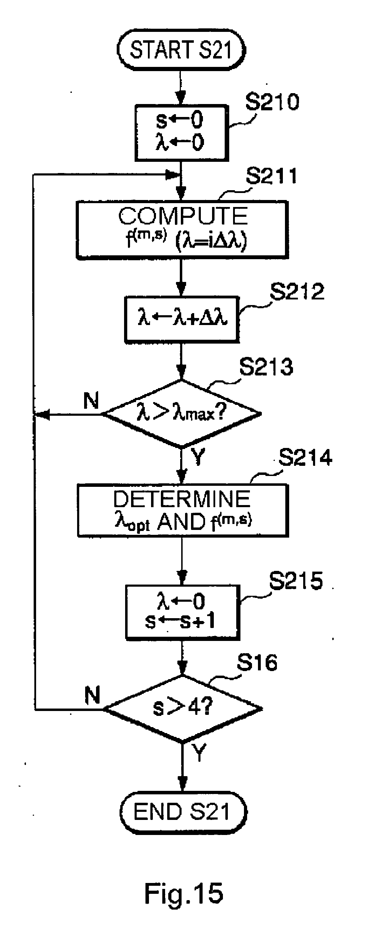

Fig. 15 is a flowchart showing the details of the process at S21 in Fig. 12.

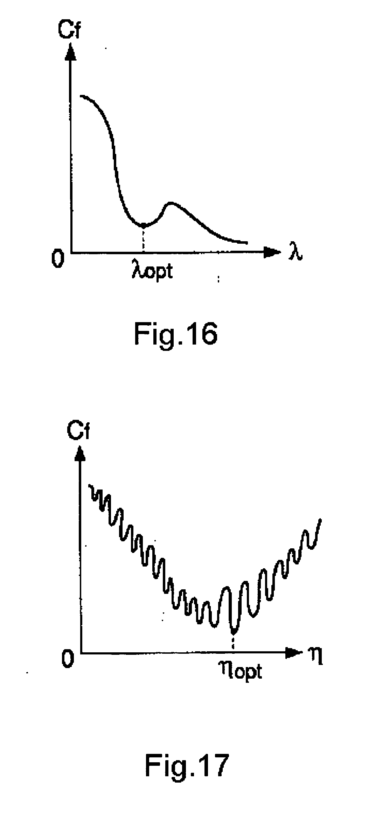

Fig. 16 is a graph showing the behavior of energy $C_f^{(m,s)}$ corresponding to $f^{(m,s)}$ ($\lambda = i\Delta\lambda$) which has been obtained for a certain $f^{(m,s)}$ while varying $\lambda$.

Fig. 17 is a diagram showing the behavior of energy $C_f^{(n)}$ corresponding to $f^{(n)}$ ($\eta = i\Delta\eta$) ($i$=0,1,...) which has been obtained while varying $\eta$.

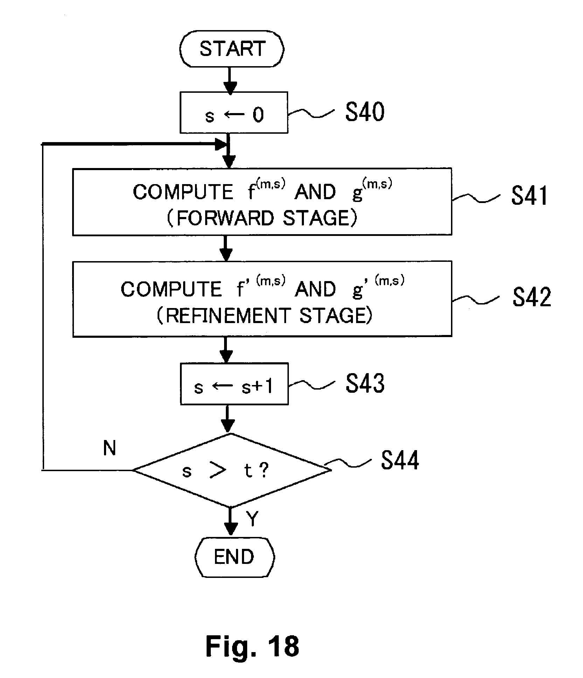

Fig. 18 is a flowchart showing a procedure by which the submapping is obtained at the m-th level in the improved base technology.

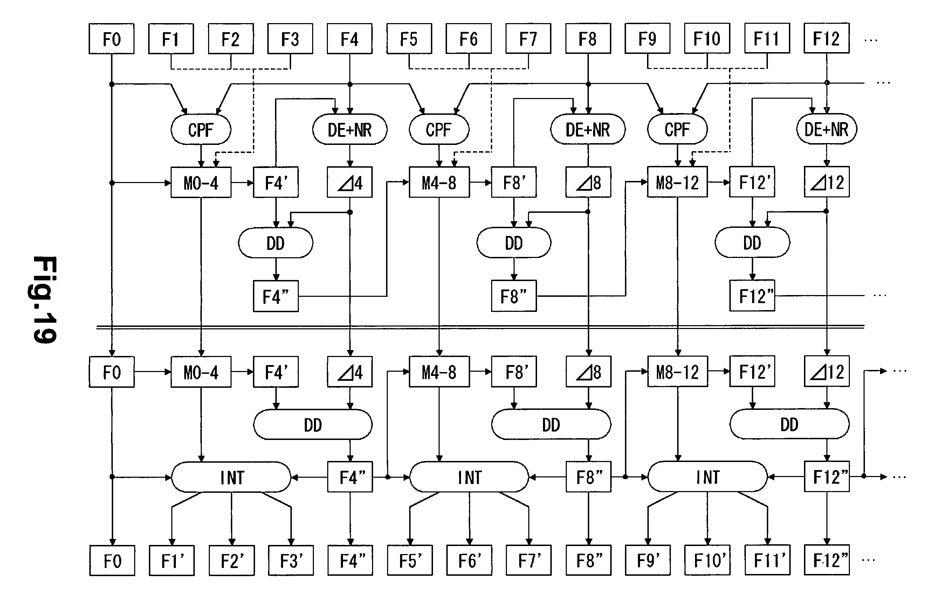

Fig. 19 shows the configuration and the process according to one embodiment of a motion image encoding and decoding apparatus.

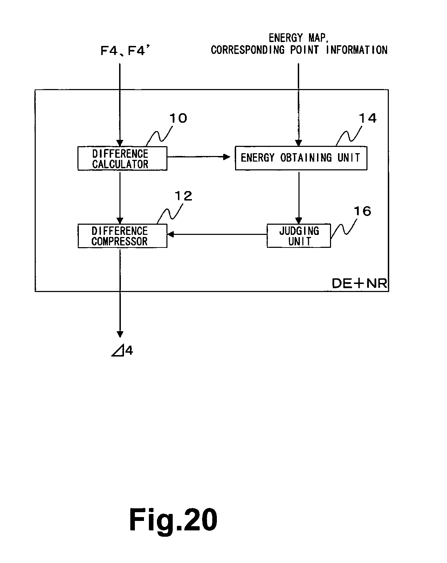

Fig. 20 shows the configuration of a difference data encoder and a noise reducer according to one embodiment of the present invention.

**EXPLANATION OF LEGENDS**

Fx: actual frames, CPF: image matching processor, DE: difference encoder, NR: noise reducer, DD: difference decoder, INT: interpolator, Fx': virtual frames, Fx": improved virtual frames, Mx-y: corresponding point information

**BEST MODE CARRYING OUT THE INVENTION**

At first, the multiresolutional critical point filter technology and the image matching processing using the technology, both of which will be utilized in the preferred embodiments, will be described in detail as "Base Technology". These techniques are patented under Japanese Patent No. 2927350 and owned by the same assignee of the present invention, and they realize an optimal achievement when combined with the present invention. However, it is to be noted that the image matching techniques which can be adopted in the present embodiments are not limited to this.

In Figs. 19 and 20, image coding and decoding techniques utilizing, in part, the base technology will be described in a specific manner.

[Embodiments of Base Technology]

The following section [1] describes elemental techniques, [2] describes a processing procedure and [3] describes some improvements on [1] and [2].

[1] Detailed description of elemental techniques

[1.1] Introduction

Using a set of new multiresolutional filters called critical point filters, image matching is accurately computed. There is no need for any prior knowledge concerning objects in question. The matching of the images is computed at each resolution while proceeding through the resolution hierarchy. The resolution hierarchy proceeds from a coarse level to a fine level. Parameters necessary for the computation are set completely automatically by dynamical computation analogous to human visual systems. Thus, there is no need to manually specify the correspondence of points between the images.

The base technology can be applied to, for instance, completely automated morphing, object recognition, stereo photogrammetry, volume rendering, smooth generation of motion images from a small number of frames. When applied to the morphing, given images can be automatically transformed. When applied to the volume rendering, intermediate images between cross sections can be accurately reconstructed, even when the distance between them is rather long and the cross sections vary widely in shape.

[1.2] The hierarchy of the critical point filters

The multiresolutional filters according to the base technology can preserve the intensity and locations of each critical point included in the images while reducing the resolution. Now, let the width of the image be N and the height of the image be M. For simplicity, assume that N=M=2n where n is a positive integer. An interval [0, N] $\subset$ R is denoted by I. A pixel of the image at position (i, j) is denoted by $p^{(i,\,j)}$ where i,j $\in$ I.

Here, a multiresolutional hierarchy is introduced. Hierarchized image groups are produced by a multiresolutional filter. The multiresolutional filter carries out a two dimensional search on an original image and detects critical points therefrom. The multiresolutinal filter then extracts the critical points from the original image to construct another image having a lower resolution. Here, the size of each of the respective images of the m-th level is denoted as 2$^m$X2$^m$ (0$\leq$$m$$\leq$$n$). A critical point filter constructs the following four new hierarchical images recursively, in the direction descending from n.

$$p_{(i,j)}^{(m,0)} = \min(\min(p_{(2i,2j)}^{(m+1,0)}, p_{(2i,2j+1)}^{(m+1,0)}), \min(p_{(2i+1,2j)}^{(m+1,0)}, p_{(2i+1,2j+1)}^{(m+1,0)}))$$

$$p_{(i,j)}^{(m,1)} = \max(\min(p_{(2i,2j)}^{(m+1,1)}, p_{(2i,2j+1)}^{(m+1,1)}), \min(p_{(2i+1,2j)}^{(m+1,1)}, p_{(2i+1,2j+1)}^{(m+1,1)}))$$

$$p_{(i,j)}^{(m,2)} = \min(\max(p_{(2i,2j)}^{(m+1,2)}, p_{(2i,2j+1)}^{(m+1,2)}), \max(p_{(2i+1,2j)}^{(m+1,2)}, p_{(2i+1,2j+1)}^{(m+1,2)}))$$

$$p_{(i,j)}^{(m,3)} = \max(\max(p_{(2i,2j)}^{(m+1,3)}, p_{(2i,2j+1)}^{(m+1,3)}), \max(p_{(2i+1,2j)}^{(m+1,3)}, p_{(2i+1,2j+1)}^{(m+1,3)}))$$

$$--- \quad (1)$$

where let

$$p_{(i,j)}^{(n,0)} = p_{(i,j)}^{(n,1)} = p_{(i,j)}^{(n,2)} = p_{(i,j)}^{(n,3)} = p_{(i,j)} \qquad --- \quad (2)$$

The above four images are referred to as subimages hereinafter. When $\min_{x \le t \le x+1}$ and $\max_{x \le t \le x+1}$ are abbreviated to $\alpha$ and $\beta$, respectively, the subimages can be expressed as follows.

$$P^{(m,0)} = \alpha(x)\alpha(y)p^{(m+1,0)}$$

$$P^{(m,1)} = \alpha(x)\beta(y)p^{(m+1,1)}$$

$$P^{(m,2)} = \beta(x)\alpha(y)p^{(m+1,2)}$$

$$P^{(m,2)} = \beta(x)\beta(y)p^{(m+1,3)}$$

Namely, they can be considered analogous to the tensor products of $\alpha$ and $\beta$. The subimages correspond to the respective critical points. As is apparent from the above equations, the critical point filter detects a critical point of the original image for every block consisting of 2 X 2 pixels. In this detection, a point having a maximum pixel value and a point having a minimum pixel value are searched with respect to two directions, namely, vertical and horizontal directions, in each block. Although pixel intensity is used as a pixel value in this base technology, various other values relating to the image may be used. A pixel having the maximum pixel values for the two directions, one having minimum pixel values for the two directions, and one having a minimum pixel value for one direction and a maximum pixel value for the other direction are detected as a local maximum point, a local minimum point, and a saddle point, respectively.

By using the critical point filter, an image (1 pixel here) of a critical point detected inside each of the respective blocks serves to represent its block image (4 pixels here). Thus, resolution of the image is reduced. From a singularity theoretical point of view, $\alpha(x)$ $\alpha(y)$ preserves the local minimum point (minima point), $\beta(x)$ $\beta(y)$ preserves the local maximum point (maxima point), $\alpha(x)$ $\beta(y)$ and $\beta(x)$ $\alpha(y)$ preserve the saddle point.

At the beginning, a critical point filtering process is applied separately to a source image and a destination image which are to be matching-computed. Thus, a series of image groups, namely, source hierarchical images and destination hierarchical images are generated. Four source hierarchical images and four destination hierarchical images are generated corresponding to the types of the critical points.

Thereafter, the source hierarchical images and the destination hierarchical images are matched in a series of the resolution levels. First, the minima points are matched using $p^{(m,0)}$. Next, the saddle points are matched using $p^{(m,1)}$ based on the previous matching result for the minima points. Other saddle points are matched using $p^{(m,2)}$. Finally, the maxima points are matched using $p^{(m,3)}$.

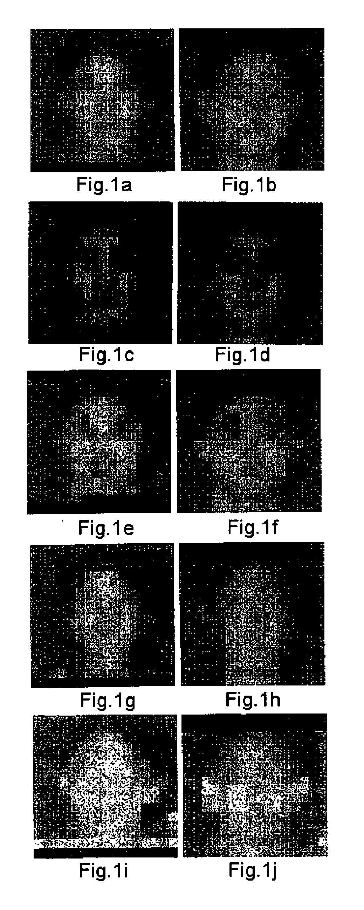

Figs. 1(c) and 1(d) show the subimages $p^{(5,0)}$ of the images in Figs. 1(a) and 1(b), respectively. Similarly, Figs. 1(e) and 1(f) show the subimages $p^{(5,1)}$. Figs. 1(g) and 1(h) show the subimages $p^{(5,2)}$. Figs. 1 (i) and 1(j) show the subimages $p^{(5,3)}$. Characteristic parts in the images can be easily matched using subimages. The eyes can be matched by $p^{(5,0)}$ since the eyes are the minima points of pixel intensity in a face. The mouths can be matched by $p^{(5,1)}$ since the mouths have low intensity in the horizontal direction. Vertical lines on the both sides of the necks become clear by $p^{(5,2)}$. The ears and bright parts of cheeks become clear by $p^{(5,3)}$ since these are the maxima points of pixel intensity.

As described above, the characteristics of an image can be extracted by the critical point filter. Thus, by comparing, for example, the characteristics of an image shot by a camera and with the characteristics of several objects recorded in advance, an object shot by the camera can be identified.

[1.3] Computation of mapping between images

The pixel of the source image at the location (i,j) is denoted by $p_{(i,j)}^{(n)}$ and that of the destination image at (k, l) is denoted by $q_{(k,l)}^{(n)}$ where i, j, k, l $\in$ I. The energy of the mapping between the images (described later) is then defined. This energy is determined by the difference in the intensity of the pixel of the source image and its corresponding pixel of the destination image and the smoothness of the mapping. First, the mapping $f^{(m,0)}$: $p^{(m,0)} \to q^{(m,0)}$ between $p^{(m,0)}$ and $q^{(m,0)}$ with the minimum energy is computed. Based on $f^{(m,0)}$, the mapping $f^{(m,1)}$ between $p^{(m,1)}$ and $q^{(m,1)}$ with the minimum energy is computed. This process continues until $f^{(m,3)}$ between $p^{(m,3)}$ and $q^{(m,3)}$ is computed. Each $f^{(m,i)}$ (i = 0,1,2,...) is referred to as a submapping. The order of i will be rearranged as shown in the following (3) in computing $f^{(m,i)}$ for the reasons to be described later.

$$f^{(m,i)} : p^{(m,\sigma(i))} \to q^{(m,\sigma(i))} \qquad --- \ (3)$$

where $\sigma(i) \in \{0,1,2,3\}$.

[1. 3. 1] Bijectivity

When the matching between a source image and a destination image is expressed by means of a mapping, that mapping shall satisfy the Bijectivity Conditions (BC) between the two images (note that a one-to-one surjective mapping is called a bijection). This is because the respective images should be connected satisfying both surjection and injection, and there is no conceptual supremacy existing between these images. It is to be noted that the mappings to be constructed here are the digital version of the bijection. In the base technology, a pixel is specified by a grid point.

The mapping of the source subimage (a subimage of a source image) to the destination subimage (a subimage of a destination image) is represented by $f^{(m,s)}$: $I/2^{n-m} \times I/2^{n-m} \to I/2^{n-m} \times I/2^{n-m}$ (s = 0,1,...), where $f^{(m,s)}_{(i,j)} = (k,l)$ means that $p^{(m,s)}_{(k,l)}$ of the source image is mapped to $q^{(m,s)}_{(k,l)}$ of the destination image. For simplicity, when f(i,j)=(k,l) holds, a pixel $q_{(k,l)}$ is denoted by $q_{f(i,j)}$.

When the data sets are discrete as image pixels (grid points) treated in the base technology, the definition of bijectivity is important. Here, the bijection will be defined in the following manner, where i,i',j,j',k and l are all integers. First, each square region (4)

$$p^{(m,s)}_{(i,j)} p^{(m,s)}_{(i+1,j)} p^{(m,s)}_{(i+1,j+1)} p^{(m,s)}_{(i,j+1)} \qquad --- \ (4)$$

on the source image plane denoted by R is considered, where i = 0, ..., $2^m-1$, and j = 0, ..., $2^m-1$. The edges of R are directed as follows.

$$\overrightarrow{p^{(m,s)}_{(i,j)} p^{(m,s)}_{(i+1,j)}}, \overrightarrow{p^{(m,s)}_{(i+1,j)} p^{(m,s)}_{(i+1,j+1)}}, \overrightarrow{p^{(m,s)}_{(i+1,j+1)} p^{(m,s)}_{(i,j+1)}} \ \text{ and } \ \overrightarrow{p^{(m,s)}_{(i,j+1)} p^{(m,s)}_{(i,j)}} \ --- \ (5)$$

This square will be mapped by f to a quadrilateral on the destination image plane. The quadrilateral (6)

$$q^{(m,s)}_{(i,j)} q^{(m,s)}_{(i+1,j)} q^{(m,s)}_{(i+1,j+1)} q^{(m,s)}_{(i,j+1)} \qquad --- \ (6)$$

denoted by $f^{(m,s)}$ (R) should satisfy the following bijectivity conditions(BC).

$$(\text{So}, \ f^{(m,s)}(R) = f^{(m,s)}(p^{(m,s)}_{(i,j)} p^{(m,s)}_{(i+1,j)} p^{(m,s)}_{(i+1,j+1)} p^{(m,s)}_{(i,j+1)}) = q^{(m,s)}_{(i,j)} q^{(m,s)}_{(i+1,j)} q^{(m,s)}_{(i+1,j+1)} q^{(m,s)}_{(i,j+1)} \ )$$

1. The edges of the quadrilateral $f^{(m,s)}$ (R) should not intersect one another.
2. The orientation of the edges of $f^{(m,s)}$ (R) should be the same as that of R (clockwise in the case of Fig. 2).
3. As a relaxed condition, retraction mapping is allowed.

The bijectivity conditions stated above shall be simply referred to as BC hereinafter.

Without a certain type of a relaxed condition, there would be no mappings which completely satisfy the BC other than a trivial identity mapping. Here, the length of a single edge of $f^{(m,s)}$ (R) may be zero. Namely, $f^{(m,s)}$ (R) may be a triangle. However, it is not allowed to be a point or a line segment having area zero. Specifically speaking, if Fig. 2 (R) is the original quadrilateral, Figs. 2 (A) and 2 (D) satisfy BC while Figs 2 (B), 2 (C) and 2 (E) do not satisfy BC.

In actual implementation, the following condition may be further imposed to easily guarantee that the mapping is surjective. Namely, each pixel on the boundary of the source image is mapped to the pixel that occupies the same locations at the destination image. In other words, f(i,j)=(i,j) (on the four lines of i=0, i=2$^m$-1, j=0, j=2$^m$-1). This condition will be hereinafter referred to as an additional condition.

[1. 3. 2] Energy of mapping

[1. 3. 2. 1] Cost related to the pixel intensity

The energy of the mapping f is defined. An objective here is to search a mapping whose energy becomes minimum. The energy is determined mainly by the difference in the intensity of between the pixel of the source image and its corresponding pixel of the destination image. Namely, the energy $C_{(i,j)}^{(m,s)}$ of the mapping $f^{(m,s)}$ at(i,j) is determined by the following equation (7).

$$C_{(i,j)}^{(m,s)} = \left| V(p_{(i,j)}^{(m,s)}) - V(q_{f(i,j)}^{(m,s)}) \right|^2 \qquad --- \quad (7)$$

where $V(p_{(i,j)}^{(m,s)})$ and $V(q_{f(i,j)}^{(m,s)})$ are the intensity values of the pixels $p_{(i,j)}^{(m,s)}$ and $q_{f(i,j)}^{(m,s)}$, respectively. The total energy $C^{(m,s)}$ of f is a matching evaluation equation, and can be defined as the sum of $C_{(i,j)}^{(m,s)}$ as shown in the following equation (8).

$$C_f^{(m,s)} = \sum_{i=0}^{i=2^m-1} \sum_{j=0}^{j=2^m-1} C_{(i,j)}^{(m,s)} \qquad --- \quad (8)$$

[1. 3. 2. 2] Cost related to the locations of the pixel for smooth mapping

In order to obtain smooth mappings, another energy D$_f$ for the mapping is introduced. The energy D$_f$ is determined by the locations of $p_{(i,j)}^{(m,s)}$ and $q_{f(i,j)}^{(m,s)}$ (i=0, 1,..., 2$^{m-1}$, j=0, 1,..., 2$^{m-1}$), regardless of the intensity of the pixels. The energy $D_{(i,j)}^{(m,s)}$ of the mapping $f^{(m,s)}$ at a point (i,j) is determined by the following equation (9).

$$D_{(i,j)}^{(m,s)} = \eta E_{0(i,j)}^{(m,s)} + E_{1(i,j)}^{(m,s)} \qquad --- \quad (9)$$

where the coefficient parameter η which is equal to or greater than 0 is a real number. And we have

$$E_{0(i,j)}^{(m,s)} = \left\| (i,j) - f^{(m,s)}(i,j) \right\|^2 \qquad --- \quad (10)$$

$$E_{1(i,j)}^{(m,s)} = \sum_{i'=i-1}^{i} \sum_{j'=j-1}^{j} \left\| (f^{(m,s)}(i,j) - (i,j)) - (f^{(m,s)}(i',j') - (i',j')) \right\|^2 / 4 \quad --- \quad (11)$$

where $\|(x,y)\| = \sqrt{x^2 + y^2}$ --- (12) and f(i',j') is defined to be zero for i'<0 and j'<0. $E_0$ is determined by the distance between (i,j) and f(i,j). $E_0$ prevents a pixel from being mapped to a pixel too far away from it. However, $E_0$ will be replaced later by another energy function. $E_1$ ensures the smoothness of the mapping. $E_1$ represents a distance between the displacement of p(i,j) and the displacement of its neighboring points. Based on the above consideration, another evaluation equation for evaluating the matching, or the energy $D_f$ is determined by the following equation (13).

$$D_f^{(m,s)} = \sum_{i=0}^{i=2^m-1} \sum_{j=0}^{j=2^m-1} D_{(i,j)}^{(m,s)} \quad --- \quad (13)$$

[1. 3. 2. 3] Total energy of the mapping

The total energy of the mapping, that is, a combined evaluation equation which relates to the combination of a plurality of evaluations, is defined as $\lambda C_{(i,j)}^{(m,s)} + D_f^{(m,s)}$, where $\lambda \geqq 0$ is a real number. The goal is to detect a state in which the combined evaluation equation has an extreme value, namely, to find a mapping which gives the minimum energy expressed by the following (14).

$$\min_f \{\lambda C_f^{(m,s)} + D_f^{(m,s)}\} \quad --- \quad (14)$$

Care must be exercised in that the mapping becomes an identity mapping if $\lambda=0$ and $\eta=0$ (i.e., $f^{(m,s)}(i,j)=(i,j)$ for all i=0,1,...,$2^m$-1 and j=0,1,...,$2^m$-1). As will be described later, the mapping can be gradually modified or transformed from an identity mapping since the case of $\lambda=0$ and $\eta=0$ is evaluated at the outset in the base technology. If the combined evaluation equation is defined as $C_f^{(m,s)} + \lambda D_f^{(m,s)}$ where the original position of $\lambda$ is changed as such, the equation with $\lambda=0$ and $\eta=0$ will be $C_f^{(m,s)}$ only. As a result thereof, pixels would be randomly corresponded to each other only because their pixel intensities are close, thus making the mapping totally meaningless. Transforming the mapping based on such a meaningless mapping makes no sense. Thus, the coefficient parameter is so determined that the identity mapping is initially selected for the evaluation as the best mapping.

Similar to this base technology, the difference in the pixel intensity and smoothness is considered in the optical flow technique. However, the optical flow technique cannot be used for image transformation since the optical flow technique takes into account only the local movement of an object. Global correspondence can be detected by utilizing the critical point filter according to the base technology.

[1. 3. 3] Determining the mapping with multiresolution

A mapping $f_{min}$ which gives the minimum energy and satisfies the BC is searched by using the multiresolution hierarchy. The mapping between the source subimage and the destination subimage at each level of the resolution is computed. Starting from the top of the resolution hierarchy (i.e., the coarsest level), the mapping is determined at each resolution level, while mappings at other level is being considered. The number of candidate mappings at each level is restricted by using the mappings at an upper (i.e., coarser) level of the hierarchy. More specifically speaking, in the course of determining a mapping at a certain level, the mapping obtained at the coarser level by one is imposed as a sort of constraint conditions.

Now, when the following equation (15) holds,

$$(i', j') = (\left\lfloor \frac{i}{2} \right\rfloor, \left\lfloor \frac{j}{2} \right\rfloor) \qquad --- \quad (15)$$

$p_{(i',j')}^{(m-1,s)}$ and $q_{(i',j')}^{(m-1,s)}$ are respectively called the parents of $p_{(i,j)}^{(m,s)}$ and $q_{(i,j)}^{(m,s)}$, where $\lfloor x \rfloor$ denotes the largest integer not exceeding x. Conversely, $p_{(i,j)}^{(m,s)}$ and $q_{(i,j)}^{(m,s)}$ are the child of $p_{(i',j')}^{(m-1,s)}$ and the child of $q_{(i',j')}^{(m-1,s)}$, respectively. A function parent (i,j) is defined by the following (16).

$$parent(i, j) = (\left\lfloor \frac{i}{2} \right\rfloor, \left\lfloor \frac{j}{2} \right\rfloor) \qquad --- \quad (16)$$

A mapping between $p_{(i,j)}^{(m,s)}$ and $q_{(k,l)}^{(m,s)}$ is determined by computing the energy and finding the minimum thereof. The value of $f^{(m,s)}(i,j)=(k,l)$ is determined as follows using f(m-1,s) (m=1, 2, ..., n). First of all, imposed is a condition that $q_{(k,l)}^{(m,s)}$ should lie inside a quadrilateral defined by the following (17) and (18). Then, the applicable mappings are narrowed down by selecting ones that are thought to be reasonable or natural among them satisfying the BC.

$$q_{g^{(m,s)}(i-1,j-1)}^{(m,s)} q_{g^{(m,s)}(i-1,j+1)}^{(m,s)} q_{g^{(m,s)}(i+1,j+1)}^{(m,s)} q_{g^{(m,s)}(i+1,j-1)}^{(m,s)} \qquad --- \quad (17)$$

where

$$g^{(m,s)}(i, j) = f^{(m-1,s)}(parent(i, j)) + f^{(m-1,s)}(parent(i, j) + (1,1)) --- \quad (18)$$

The quadrilateral defined above is hereinafter referred to as the inherited quadrilateral of $p_{(i,j)}^{(m,s)}$. The pixel minimizing the energy is sought and obtained inside the inherited quadrilateral.

Fig. 3 illustrates the above-described procedures. The pixels A, B, C and D of the source image are mapped to A', B', C' and D' of the destination image, respectively, at the (m-1)th level in the hierarchy. The pixel $p_{(i,j)}^{(m,s)}$ should be mapped to the pixel $q_{f^{(m)}(i,j)}^{(m,s)}$ which exists inside the inherited quadrilateral A' B' C' D'. Thereby, bridging from the mapping at the (m-1)th level to the mapping at the m-th level is achieved.

The energy $E_0$ defined above is now replaced by the following (19) and (20)

$$E_{0(i,j)} = \left\| f^{(m,0)}(i, j) - g^{(m)}(i, j) \right\|^2 \qquad --- \quad (19)$$

$$E_{0(i,j)} = \left\| f^{(m,s)}(i, j) - f^{(m,s-1)}(i, j) \right\|^2, (1 \le i) \qquad --- \quad (20)$$

for computing the submapping $f^{(m,0)}$ and the submapping $f^{(m,s)}$ at the m-th level, respectively.

In this manner, a mapping which keeps low the energy of all the submappings is obtained. Using the equation (20) makes the submappings corresponding to the different critical points associated to each other within the same level in order that the subimages can have high similarity. The equation (19) represents the distance between $f^{(m,s)}(i,j)$ and the location where (i,j) should be mapped when regarded as a part of a pixel at the (m-1) the level.

When there is no pixel satisfying the BC inside the inherited quadrilateral A'B'C'D', the following steps are taken. First, pixels whose distance from the boundary of A' B' C' D' is L (at first, L=1) are examined. If a pixel whose energy is the minimum among them satisfies the BC, then this pixel will be selected as a value of $f^{(m,s)}(i,j)$. L is increased until such a pixel is found or L reaches its upper bound $L_{\max}^{(m)}$. $L_{\max}^{(m)}$ is fixed for each level m. If no such a pixel is found at all, the third condition of the BC is ignored temporarily and such mappings that caused the area of the transformed quadrilateral to become zero (a point or a line) will be permitted so as to determine $f^{(m,s)}(i, j)$. If such a pixel is still not found, then the first and the second conditions of the BC will be removed.

Multiresolution approximation is essential to determining the global correspondence of the images while preventing the mapping from being affected by small details of the images. Without the multiresolution approximation, it is impossible to detect a correspondence between pixels whose distances are large. In the case where the multiresolution approximation is not available, the size of an image will be limited to the very small one, and only tiny changes in the images can be handled. Moreover, imposing smoothness on the mapping usually makes it difficult to find the correspondence of such pixels. That is because the energy of the mapping from one pixel to another pixel which is far therefrom is high. On the other hand, the multiresolution approximation enables finding the approximate correspondence of such pixels. This is because the distance between the pixels is small at the upper (coarser) level of the hierarchy of the resolution.

[1. 4] Automatic determination of the optimal parameter values

One of the main deficiencies of the existing image matching techniques lies in the difficulty of parameter adjustment. In most cases, the parameter adjustment is performed manually and it is extremely difficult to select the optical value. However, according to the base technology, the optimal parameter values can be obtained completely automatically.

The systems according to this base technology includes two parameters, namely, $\lambda$ and $\eta$, where $\lambda$ and $\eta$ represent the weight of the difference of the pixel intensity and the stiffness of the mapping, respectively. The initial value for these parameters are 0. First, $\lambda$ is gradually increased from $\lambda=0$ while $\eta$ is fixed to 0. As $\lambda$ becomes larger and the value of the combined evaluation equation (equation (14)) is minimized, the value of $C_f^{(m,s)}$ for each submapping generally becomes smaller. This basically means that the two images are matched better. However, if $\lambda$ exceeds the optimal value, the following phenomena

(1 - 4) are caused.

1. Pixels which should not be corresponded are erroneously corresponded only because their intensities are close.
2. As a result, correspondence between images becomes inaccurate, and the mapping becomes invalid.

3. As a result, $D_f^{(m,s)}$ in the equation 14 tends to increase abruptly.

4. As a result, since the value of the equation 14 tends to increase abruptly, $f^{(m,s)}$ changes in order to suppress the abrupt increase of $D_f^{(m,s)}$. As a result, $C_f^{(m,s)}$ increases.

Therefore, a threshold value at which $C_f^{(m,s)}$ turns to an increase from a decrease is detected while a state in which the equation (14) takes the minimum value with $\lambda$ being increased is kept. Such $\lambda$ is determined as the optimal value at $\eta=0$. Then, the behavior of $C_f^{(m,s)}$ is examined while $\eta$ is increased gradually, and $\eta$ will be automatically determined by a method described later. $\lambda$ will be determined corresponding to such the automatically determined $\eta$.

The above-described method resembles the focusing mechanism of human visual systems. In the human visual systems, the images of the respective right eye and left eye are matched while moving one eye. When the objects are clearly recognized, the moving eye is fixed.

[1. 4. 1] Dynamic determination of λ

λ is increased from 0 at a certain interval, and the a subimage is evaluated each time the value of λ changes. As shown in the equation (14), the total energy is defined by $\lambda C_f^{(m,s)} + D_f^{(m,s)}$ . $D_{(i,j)}^{(m,s)}$ in the equation (9) represents the smoothness and theoretically becomes minimum when it is the identity mapping. $E_0$ and $E_1$ increase as the mapping is further distorted. Since $E_1$ is an integer, 1 is the smallest step of $D_f^{(m,s)}$ . Thus, that changing the mapping reduces the total energy is impossible unless a changed amount (reduction amount) of the current $\lambda C_{(i,j)}^{(m,s)}$ is equal to or greater than 1. Since $D_f^{(m,s)}$ increases by more than 1 accompanied by the change of the mapping, the total energy is not reduced unless $\lambda C_{(i,j)}^{(m,s)}$ is reduced by more than 1.

Under this condition, it is shown that $C_{(i,j)}^{(m,s)}$ decreases in normal cases as λ increases. The histogram of $C_{(i,j)}^{(m,s)}$ is denoted as h(l), where h(l) is the number of pixels whose energy $C_{(i,j)}^{(m,s)}$ is $l^2$. In order that $\lambda l^2 \geqq 1$, for example, the case of $l^2 = l/\lambda$ is considered. When λ varies from $\lambda_1$ to $\lambda_2$, a number of pixels (denoted A) expressed by the following (21)

$$A = \sum_{l=\left\lceil\frac{1}{\lambda_2}\right\rceil}^{\left\lfloor\frac{1}{\lambda_1}\right\rfloor} h(l) \cong \int_{l=\frac{1}{\lambda_2}}^{\frac{1}{\lambda_1}} h(l)dl = -\int_{\lambda_2}^{\lambda_1} h(l)\frac{1}{\lambda^{3/2}}d\lambda = \int_{\lambda_1}^{\lambda_2}\frac{h(l)}{\lambda^{3/2}}d\lambda \qquad --- \quad (21)$$

changes to a more stable state having the energy (22) which is

$$C_f^{(m,s)} - l^2 = C_f^{(m,s)} - \frac{1}{\lambda}. \qquad --- \quad (22)$$

Here, it is assumed that all the energy of these pixels is approximated to be zero. It means that the value of $C_{(i,j)}^{(m,s)}$ changes by (23).

$$\partial C_f^{(m,s)} = -\frac{A}{\lambda} \qquad --- \quad (23)$$

As a result, the equation (24) holds.

$$\frac{\partial C_f^{(m,s)}}{\partial \lambda} = -\frac{h(l)}{\lambda^{5/2}} \qquad --- \quad (24)$$

Since h(l)>0 , $C_f^{(m,s)}$ decreases in normal case. However, when λ tends to exceed the optimal value, the above phenomenon that is characterized by the increase in $C_f^{(m,s)}$ occurs. The optimal value of λ is determined by detecting this phenomenon.

When

$$h(l) = Hl^k = \frac{H}{\lambda^{k/2}} \qquad --- \quad (25)$$

is assumed where both H(h>0) and k are constants, the equation (26) holds.

$$\frac{\partial C_f^{(m,s)}}{\partial \lambda} = -\frac{H}{\lambda^{5/2+k/2}} \qquad --- \quad (26)$$

Then, if k≠-3, the following (27) holds.

$$C_f^{(m,s)} = C + \frac{H}{(3/2+k/2)\lambda^{3/2+k/2}} \qquad --- \quad (27)$$

The equation (27) is a general equation of $C_f^{(m,s)}$ (where C is a constant).

When detecting the optimal value of λ, the number of pixels violating the BC may be examined for safety. In the course of determining a mapping for each pixel, the probability of violating the BC is assumed $p_0$ here. In that case, since

$$\frac{\partial A}{\partial \lambda} = \frac{h(l)}{\lambda^{3/2}} \qquad --- \quad (28)$$

holds, the number of pixels violating the BC increases at a rate of the equation (29).

$$B_0 = \frac{h(l)p_0}{\lambda^{3/2}} \qquad --- \quad (29)$$

Thus,

$$\frac{B_0\lambda^{3/2}}{p_0h(l)} = 1 \qquad --- \quad (30)$$

is a constant. If assumed that h(l)=Hl^k, the following (31), for example,

$$B_0\lambda^{3/2+k/2} = p_0H \qquad --- \quad (31)$$

becomes a constant. However, when λ exceeds the optimal value, the above value of (31) increases abruptly. By detecting this phenomenon, whether or not the value of $B_0\lambda^{3/2+k/2}/2^m$ exceeds an abnormal value $B_{0thres}$ exceeds is inspected, so that the optimal value of can be determined. Similarly, whether or not the value of $B_1\lambda^{3/2+k/2}/2^m$ exceeds an abnormal value $B_{1thres}$, so that the increasing rate $B_1$ of pixels violating the third condition of the BC is checked. The reason why the fact $2^m$ is introduced here will be described at a later stage. This system is not sensitive to the two threshold values $B_{0thres}$ and $B_{1thres}$. The two threshold values $B_{0thres}$ and $B_{1thres}$ can be used to detect the excessive distortion of the mapping which is failed to be detected through the observation of the energy $C_f^{(m,s)}$.

In the experimentation, the computation of $f^{(m,s)}$ is stopped and then the computation of $f^{(m,s+1)}$ is started when $\lambda$ exceeded 0.1. That is because the computation of submappings is affected by the difference of mere 3 out of 255 levels in the pixel intensity when $\lambda > 0.1$, and it is difficult to obtain a correct result when $\lambda > 0.1$.

[1. 4. 2] Histogram h(l)

The examination of $C_f^{(m,s)}$ does not depend on the histogram h(l). The examination of the BC and its third condition may be affected by the h(l). k is usually close to 1 when ( $\lambda$ , $C_f^{(m,s)}$ ) is actually plotted. In the experiment, k=1 is used, that is, $B_0\lambda^2$ and $B_1\lambda^2$ are examined. If the true value of k is less than 1, $B_0\lambda^2$ and $B_1\lambda^2$ does not become constants and increase gradually by the factor of $\lambda^{(1-k)/2}$. If h(l) is a constant, the factor is, for example, $\lambda^{1/2}$. However, such a difference can be absorbed by setting the threshold $B_{0thres}$ appropriately.

Let us model the source image by a circular object with its center at$(x_0,y_0)$ and its radius r, given by:

$$p(i,j) = \begin{cases} \dfrac{255}{r} c(\sqrt{(i-x_0)^2 + (j-y_0)^2})...(\sqrt{(i-x_0)^2 + (j-y_0)^2} \le r) \\ 0...(otherwise) \end{cases}$$

$$--- (32)$$

and the destination image given by:

$$q(i,j) = \begin{cases} \dfrac{255}{r} c(\sqrt{(i-x_1)^2 + (j-y_1)^2})...(\sqrt{(i-x_1)^2 + (j-y_1)^2} \le r) \\ 0...(otherwise) \end{cases}$$

$$--- (33)$$

with its center at $(x_1,y_1)$ and radius r. Let c(x) has the form of $c(x)=x^k$. When the centers $(x_0,y_0)$ and $(x_1,y_1)$ are sufficiently far from each other, the histogram h(l) is then in the form of:

$$h(l) \propto rl^k (k \ne 0) \qquad --- (34)$$

When k=1, the images represent objects with clear boundaries embedded in the backgrounds. These objects become darker toward their centers and brighter toward their boundaries. When k=-1, the images represent objects with vague boundaries. These objects are brightest at their centers, and become darker toward boundaries. Without much loss of generality, it suffices to state that objects in general are between these two types of objects. Thus, k such that $-1 \le k \le 1$ can cover the most cases, and it is guaranteed that the equation (27) is generally a decreasing function.

As can be observed from the above equation (34), attention must be directed to the fact that r is influenced by the resolution of the image, namely, r is proportional to $2^m$. That is why the factor $2^m$ was introduced in the above section [1.4.1].

[1. 4. 3] Dynamic determination of η

The parameter η can also be automatically determined in the same manner. Initially, η is set to zero, and the final mapping f$^{(n)}$ and the energy $C_f^{(n)}$ at the finest resolution are computed. Then, after η is increased by a certain value Δη and the final mapping f$^{(n)}$ and the energy $C_f^{(n)}$ at the finest resolution are again computed. This process is repeated until the optimal value is obtained. η represents the stiffness of the mapping because it is a weight of the following equation (35).

$$E_{0(i,j)}^{(m,s)} = \left\| f^{(m,s)}(i,j) - f^{(m,s-1)}(i,j) \right\|^2 \qquad --- \quad (35)$$

When η is zero, $D_f^{(n)}$ is determined irrespective of the previous submapping, and the present submapping would be elastically deformed and become too distorted. On the other hand, when η is a very large value, $D_f^{(n)}$ is almost completely determined by the immediately previous submapping. The submappings are then very stiff, and the pixels are mapped to almost the same locations. The resulting mapping is therefore the identity mapping. When the value of η increases from 0, $C_f^{(n)}$ gradually decreases as will be described later. However, when the value of η exceeds the optimal value, the energy starts increasing as shown in Fig. 4. In Fig. 4, the x-axis represents η, and y-axis represents C$_f$.

The optimum value of η which minimizes $C_f^{(n)}$ can be obtained in this manner. However, since various elements affects the computation compared to the case of λ, $C_f^{(n)}$ changes while slightly fluctuating. This difference is caused because a submapping is re-computed once in the case of λ whenever an input changes slightly, whereas all the submappings must be re-computed in the case of η. Thus, whether the obtained value of $C_f^{(n)}$ is the minimum or not cannot be judged instantly. When candidates for the minimum value are found, the true minimum needs to be searched by setting up further finer interval.

[1.5] Supersampling

When deciding the correspondence between the pixels, the range of f$^{(m,s)}$ can be expanded to R X R (R being the set of real numbers) in order to increase the degree of freedom. In this case, the intensity of the pixels of the destination image is interpolated, so that f$^{(m,s)}$ having the intensity at non-integer points

$$V(q_{f^{(m,s)}(i,j)}^{(m,s)}) \qquad --- \quad (36)$$

is provided. Namely, supersampling is performed. In its actual implementation, f$^{(m,s)}$ is allowed to take integer and half integer values, and

$$V(q_{(i,j)+(0.5,0.5)}^{(m,s)}) \qquad --- \quad (37)$$

is given by

$$(V(q_{(i,j)}^{(m,s)}) + V(q_{(i,j)+(1,1)}^{(m,s)}))/2 \quad --- \quad (38)$$

[1. 6] Normalization of the pixel intensity of each image

When the source and destination images contain quite different objects, the raw pixel intensity may not be used to compute the mapping because a large difference in the pixel intensity causes excessively large energy $C_f^{(m,s)}$ relating the intensity, thus making it difficult to perform the correct evaluation.

For example, the matching between a human face and a cat' s face is computed. The cat's face is covered with hair and is a mixture of very bright pixels and very dark pixels. In this case, in order to compute the submappings of the two faces, its subimages are normalized. Namely, the darkest pixel intensity is set to 0 while the brightest pixel intensity is set to 255, and other pixel intensity values are obtained using the linear interpolation.

[1. 7] Implementation

In the implementation, utilized is a heuristic method where the computation proceeds linearly as the source image is scanned. First, the value of f(m,s) is determined at the top leftmost pixel (i,j)=(0,0). The value of each f(m,s)(i,j) is then determined while i is increased by one at each step. When i reaches the width of the image, j is increased by one and i is reset to zero. Thereafter, f(m,s)(i,j) is determined while scanning the source image. Once pixel correspondence is determined for all the points, it means that a single mapping f(m,s) is determined.

When a corresponding point q$_{f(i,j)}$ is determined for p$_{(i,j)}$, a corresponding point q$_{f(i,j+1)}$ of p$_{(i,j+1)}$ is determined next. The position of q$_{f(i,j+1)}$ is constrained by the position of q$_{f(i,j)}$ since the position of q$_{f(i,j+1)}$ satisfies the BC. Thus, in this system, a point whose corresponding point is determined earlier is given higher priority. If the situation continues in which (0,0) is always given the highest priority, the final mapping might be unnecessarily biased. In order to avoid this bias, f(m,s) is determined in the following manner in the base technology.

First, when (s mod 4) is 0, f(m,s) is determined starting from (0,0) while gradually increasing both i and j. When (s mod 4) is 1, it is determined starting from the top rightmost location while decreasing i and increasing j. When (s mod 4) is 2, it is determined starting from the bottom rightmost location while decreasing both i and j. When (s mod 4) is 3, it is determined starting from the bottom leftmost location while increasing i and decreasing j. Since a concept such as the submapping, that is, a parameter s, does not exist in the finest n-th level, f(m,s) is computed continuously in two directions on the assumption that s=0 and s=2.

In the actual implementation, the values of f(m,s) (i,j) (m=0,...,n) that satisfy the BC are chosen as much as possible, from the candidates (k,1) by awarding a penalty to the candidates violating the BC. The energy D$_{(k,l)}$ of the candidate that violates the third condition of the BC is multiplied by φ and that of a candidate that violates the first or second condition of the BC is multiplied by φ. In the actual implementation, φ=2 and φ =100000 are used.

In order to check the above-mentioned BC, the following test is performed as the actual procedure when determining (k,l)=f(m,s)(i,j). Namely, for each grid point (k,l) in the inherited quadrilateral of f(m,s)(i,j), whether or not the z-component of the outer product of

$$W = \vec{A} \times \vec{B} \quad --- \quad (39)$$

is equal to or greater than 0 is examined, where

$$\vec{A} = \overrightarrow{q_{f^{(m,s)}(i,j-1)}^{(m,s)} q_{f^{(m,s)}(i+1,j-1)}^{(m,s)}} \quad ---(40)$$

$$\vec{B} = \overrightarrow{q_{f^{(m,s)}(i,j-1)}^{(m,s)} q_{(k,l)}^{(m,s)}} \quad ---(41)$$

Here, the vectors are regarded as 3D vectors and the z-axis is defined in the orthogonal right-hand coordinate system.

When W is negative, the candidate is awarded a penalty by multiplying $D_{(k,l)}^{(m,s)}$ by $\phi$ so as not to be selected as much as possible.

Figs. 5 (a) and 5 (b) illustrate the reason why this condition is inspected. Fig. 5 (a) shows a candidate without a penalty and Fig. 5 (b) shows one with a penalty. When determining the mapping $f^{(m,s)}(i,j+1)$ for the adjacent pixel at $(i,j+1)$, there is no pixel on the source image plane that satisfies the BC if the z-component of W is negative because then $q_{(k,l)}^{(m,s)}$ passes the boundary of the adjacent quadrilateral.

[1. 7. 1] The order of submappings

In the actual implementation, $\sigma$ (0)=0, $\sigma$ (1)=1, $\sigma$ (2)=2, $\sigma$ (3)=3, $\sigma$ (4)=0 were used when the resolution level was even, while $\sigma$ (0)=3, $\sigma$ (1)=2, $\sigma$ (2)=1, $\sigma$ (3)=0, $\sigma$ (4)=3 were used when the resolution level was odd. Thus, the submappings are shuffled in an approximately manner. It is to be noted that the submapping is primarily of four types, and s may be any one among 0 to 3. However, a processing with s=4 was actually performed for the reason described later.

[1. 8] Interpolations

After the mapping between the source and destination images is determined, the intensity values of the corresponding pixels are interpolated. In the implementation, trilinear interpolation is used. Suppose that a square $p_{(i,j)}p_{(i+1,j)}p_{(i+1,j+1)}p_{(i,j+1)}$ on the source image plane is mapped to a quadrilateral $q_{f(i,j)}q_{f(i+1,j)}q_{f(i+1,j+1)}q_{f(i,j+1)}$ on the destination image plane. For simplicity, the distance between the image planes is assumed 1. The intermediate image pixels $r(x,y,t)$ ($0 \leq x \leq N-1$, $0 \leq y \leq M-1$) whose distance from the source image plane is t ($0 \leq t \leq 1$) are obtained as follows. First, the location of the pixel $r(x,y,t)$, where $x,y, t \in R$, is determined by the equation (42).

$$
\begin{aligned}
(x,y) = &\ (1-dx)(1-dy)(1-t)(i,j) + (1-dx)(1-dy)tf(i,j) \\
&+ dx(1-dy)(1-t)(i+1,j) + dx(1-dy)tf(i+1,j) \\
&+ (1-dx)dy(1-t)(i,j+1) + (1-dx)dytf(i,j+1) \\
&+ dxdy(1-t)(i+1,j+1) + dxdytf(i+1,j+1)
\end{aligned} \quad \text{---} \quad (42)
$$

The value of the pixel intensity at $r(x,y,t)$ is then determined by the equation (43).

$$
\begin{aligned}
V(r(x,y,t)) = &\ (1-dx)(1-dy)(1-t)V(p_{(i,j)}) + (1-dx)(1-dy)tV(q_{f(i,j)}) \\
&+ dx(1-dy)(1-t)V(p_{(i+1,j)}) + dx(1-dy)tV(q_{f(i+1,j)}) \\
&+ (1-dx)dy(1-t)V(p_{(i,j+1)}) + (1-dx)dytV(q_{f(i,j+1)}) \\
&+ dxdy(1-t)V(p_{(i+1,j+1)}) + dxdytV(q_{f(i+1,j+1)})
\end{aligned}
$$

$$\text{---} \quad (43)$$

where dx and dy are parameters varying from 0 to 1.

[1. 9] Mapping on which constraints are imposed

So far, the determination of the mapping to which no constraint is imposed has been described. However, when a correspondence between particular pixels of the source and destination images is provided in a predetermined manner, the mapping can be determined using such correspondence as a constraint.

The basic idea is that the source image is roughly deformed by an approximate mapping which maps the specified pixels of the source image to the specified pixels of the destination images and thereafter a mapping f is accurately computed.

First, the specified pixels of the source image are mapped to the specified pixels of the destination image, then the approximate mapping that maps other pixels of the source image to appropriate locations are determined. In other words, the mapping is such that pixels in the vicinity of the specified pixels are mapped to the locations near the position to which the specified one is mapped. Here, the approximate mapping at the m-th level in the resolution hierarchy is denoted by $F^{(m)}$.

The approximate mapping F is determined in the following manner. First, the mapping for several pixels are specified. When $n_s$ pixels

$$p(i_0, j_0), p(i_1, j_1),..., p(i_{n_s-1}, j_{n_s-1}) \qquad --- \quad (44)$$

of the source image are specified, the following values in the equation (45) are determined.

$$F^{(n)}(i_0, j_0) = (k_0, l_0),$$
$$F^{(n)}(i_1, j_1) = (k_1, l_1),..., \qquad --- \quad (45)$$
$$F^{(n)}(i_{n_s-1}, j_{n_s-1}) = (k_{n_s-1}, l_{n_s-1})$$

For the remaining pixels of the source image, the amount of displacement is the weighted average of the displacement of $p(i_h, j_h)$ (h=0,..., $n_s$-1). Namely, a pixel $p_{(i,j)}$ is mapped to the following pixel (expressed by the equation (46)) of the destination image.

$$F^{(m)}(i,j) = \frac{(i,j) + \sum_{h=0}^{h=n_s-1}(k_h - i_h, l_h - j_h)weight_h(i,j)}{2^{n-m}} \qquad --- \quad (46)$$

where

$$weight_h(i,j) = \frac{1/\|(i_h - i, j_h - j)\|^2}{total\_weight(i,j)} \qquad --- \quad (47)$$

where

$$total\_weight(i,j) = \sum_{h=0}^{h=n_s-1} 1/\|(i_h - i, j_h - j)\|^2 \qquad --- \quad (48)$$

Second, the energy $D_{(i,j)}^{(m,s)}$ of the candidate mapping f is changed so that mapping f similar to $F^{(m)}$ has a lower energy. Precisely speaking, $D_{(i,j)}^{(m,s)}$ is expressed by the equation (49).

$$D_{(i,j)}^{(m,s)} = E_{0(i,j)}^{(m,s)} + \eta E_{1(i,j)}^{(m,s)} + \kappa E_{2(i,j)}^{(m,s)} \qquad --- \quad (49)$$

$$E_{2(i,j)}^{(m.s)} = \begin{cases} 0, & if \left\| F^{(m)}(i,j) - f^{(m,s)}(i,j) \right\|^2 \leq \left\lfloor \dfrac{\rho^2}{2^{2(n-m)}} \right\rfloor \\ \left\| F^{(m)}(i,j) - f^{(m,s)}(i,j) \right\|^2, & otherwise \end{cases} \qquad ---\ (50)$$

where $\kappa, \rho \geqq 0$. Finally, the mapping f is completely determined by the above-described automatic computing process of mappings.

Note that $E_{2(i,j)}^{(m.s)}$ becomes 0 if $f^{(m,s)}(i,j)$ is sufficiently close to $F^{(m)}(i,j)$ i.e., the distance therebetween is equal to or less than

$$\left\lfloor \dfrac{\rho^2}{2^{2(n-m)}} \right\rfloor \qquad ---\ (51)$$

It is defined so because it is desirable to determine each value $f^{(m,s)}(i,j)$ automatically to fit in an appropriate place in the destination image as long as each value $f^{(m,s)}(i,j)$ is close to $F^{(m)}(i,j)$. For this reason, there is no need to specify the precise correspondence in detail, and the source image is automatically mapped so that the source image matches the destination image.

[2] Concrete Processing Procedure

The flow of the process utilizing the respective elemental techniques described in [1] will be described.

Fig. 6 is a flowchart of the entire procedure of the base technology. Referring to Fig. 6, a processing using a multiresolutional critical point filter is first performed (S1). A source image and a destination image are then matched (S2). S2 is not indispensable, and other processings such as image recognition may be performed instead, based on the characteristics of the image obtained at S1.

Fig. 7 is a flowchart showing the details of the process at S1 shown in Fig. 6. This process is performed on the assumption that a source image and a destination image are matched at S2. Thus, a source image is first hierarchized using a critical point filter (S10) so as to obtain a series of source hierarchical images. Then, a destination image is hierarchized in the similar manner (S11) so as to obtain a series of destination hierarchical images. The order of S10 and S11 in the flow is arbitrary, and the source image and the destination image can be generated in parallel.

Fig. 8 is a flowchart showing the details of the process at S10 shown in Fig. 7. Suppose that the size of the original source image is $2^n X 2^n$. Since source hierarchical images are sequentially generated from one with a finer resolution to one with a coarser resolution, the parameter m which indicates the level of resolution to be processed is set to n (S100). Then, critical points are detected from the images $p^{(m,0)}$, $p^{(m,1)}$, $p^{(m,2)}$ and $p^{(m,3)}$ of the m-th level of resolution, using a critical point filter (S101), so that the images $p^{(m-1,0)}$, $p^{(m-1,1)}$, $p^{(m-1,2)}$ and $p^{(m-1,3)}$ of the (m-1) th level are generated (S102). Since m=n here, $p^{(m,0)} = p^{(m,1)} = p^{(m,2)} = p^{(m,3)} = p^{(n)}$ holds and four types of subimages are thus generated from a single source image.

Fig. 9 shows correspondence between partial images of the m-th and those of (m-1) th levels of resolution. Referring to Fig. 9, respective values represent the intensity of respective pixels. $p^{(m,s)}$ symbolizes four images p(m,0) through $p^{(m,3)}$, and when generating $p^{(m-1,0)}$, $p^{(m,s)}$ is regarded as $p^{(m,0)}$. For example, as for the block shown in Fig. 9, comprising four pixels with their pixel intensity values indicated inside, images $p^{(m-1,0)}$, $p^{(m-1,1)}$, $p^{(m-1, 2)}$ and $p^{(m-1,3)}$ acquire "3", "8", "6" and "10", respectively, according to the rules described in [1.2]. This block at the m-th level is replaced at the (m-1) th level by respective single pixels acquired thus. Therefore, the size of the subimages at the (m-1) th level is $2^{m-1} X 2^{m-1}$.

After m is decremented (S103 in Fig. 8), it is ensured that m is not negative (S104). Thereafter, the process returns to S101, so that subimages of the next level of resolution, i.e., a next coarser level, are generated. The above process is repeated until subimages at m=0 (0-th level) are generated to complete the process at S10. The size of the subimages at the 0-th level is 1 X 1.

Fig. 10 shows source hierarchical images generated at S10 in the case of n=3. The initial source image is the only image common to the four series followed. The four types of subimages are generated independently, depending on the type of a critical point. Note that the process in Fig. 8 is common to S11 shown in Fig. 7, and that destination hierarchical images are generated through the similar procedure. Then, the process by S1 shown in Fig. 6 is completed.

In the base technology, in order to proceed to S2 shown in Fig. 6 a matching evaluation is prepared. Fig. 11 shows the preparation procedure. Referring to Fig. 11, a plurality of evaluation equations are set (S30). Such the evaluation equations include the energy $C_f^{(m,s)}$ concerning a pixel value, introduced in [1.3.2.1], and the energy $D_f^{(m,s)}$ concerning the smoothness of the mapping introduced in [1.3.2.2]. Next, by combining these evaluation equations, a combined evaluation equation is set (S31). Such the combined evaluation equation includes $\lambda C_{(i,j)}^{(m,s)} + D_f^{(m,s)}$ . Using η introduced in [1.3.2.2], we have

$$\sum\sum (\lambda C_{(i,j)}^{(m,s)} + \eta E_{0(i,j)}^{(m,s)} + E_{1(i,j)}^{(m,s)}) \quad --- \quad (52)$$

In the equation (52) the sum is taken for each i and j where i and j run through 0, 1,... , $2^{m-1}$. Now, the preparation for matching evaluation is completed.

Fig. 12 is a flowchart showing the details of the process of S2 shown in Fig. 6. As described in [1], the source hierarchical images and destination hierarchical images are matched between images having the same level of resolution. In order to detect global corresponding correctly, a matching is calculated in sequence from a coarse level to a fine level of resolution. Since the source and destination hierarchical images are generated by use of the critical point filter, the location and intensity of critical points are clearly stored even at a coarse level. Thus, the result of the global matching is far superior to the conventional method.

Referring to Fig. 12, a coefficient parameter η and a level parameter m are set to 0 (S20). Then, a matching is computed between respective four subimages at the m-th level of the source hierarchical images and those of the destination hierarchical images at the m-th level, so that four types of submappings $f^{(m,s)}$ (s=0, 1, 2, 3) which satisfy the BC and minimize the energy are obtained (S21). The BC is checked by using the inherited quadrilateral described in [1.3.3]. In that case, the submappings at the m-th level are constrained by those at the (m-1) th level, as indicated by the equations (17) and (18). Thus, the matching computed at a coarser level of resolution is used in subsequent calculation of a matching. This is a vertical reference between different levels. If m=0, there is no coarser level and the process, but this exceptional process will be described using Fig. 13.

On the other hand, a horizontal reference within the same level is also performed. As indicated by the equation (20) in [1.3.3], $f^{(m,3)}$, $f^{(m,2)}$ and $f^{(m,1)}$ are respectively determined so as to be analogous to $f^{(m,2)}$, $f^{(m,1)}$ and $f^{(m,0)}$. This is because a situation in which the submappings are totally different seems unnatural even though the type of critical points differs so long as the critical points are originally included in the same source and destination images. As can been seen from the equation (20), the closer the submappings are to each other, the smaller the energy becomes, so that the matching is then considered more satisfactory.

As for $f^{(m,0)}$, which is to be initially determined, a coarser level by one is referred to since there is no other submapping at the same level to be referred to as shown in the equation (19). In the experiment, however, a procedure is adopted such that after the submappings were obtained up to $f^{(m,3)}$, $f^{(m,0)}$ is renewed once utilizing the thus obtained subamppings as a constraint. This procedure is equivalent to a process in which s=4 is substituted into the equation (20) and $f^{(m,4)}$ is set to $f^{(m,0)}$ anew. The above process is employed to avoid the tendency in which the degree of association between $f^{(m,0)}$ and $f^{(m,3)}$ becomes too low. This scheme actually produced a preferable result. In addition to this scheme, the submappings are shuffled in the experiment as described in [1.7.1], so as to closely maintain the degrees of association among submappings which are originally determined independently for each type of critical point. Furthermore, in order to prevent the tendency of being dependent on the starting point in the process, the location thereof is changed according to the value of s as described in [1.7].

Fig. 13 illustrates how the submapping is determined at the 0-th level. Since at the 0-th level each sub-image is consitituted by a single pixel, the four submappings $f^{(0,s)}$ is automatically chosen as the identity mapping. Fig. 14 shows how the submappings are determined at the first level. At the first level, each of the sub-images is constituted of four pixels, which are indicated by a solid line. When a corresponding point (pixel) of the point (pixel) x in $p^{(1,s)}$ is searched within $q^{(1,s)}$, the following procedure is adopted.

    1. An upper left point a, an upper right point b, a lower left point c and a lower right point d with respect to the point x are obtained at the first level of resolution.

    2. Pixels to which the points a to d belong at a coarser level by one, i.e., the 0-th level, are searched. In Fig. 14, the points a to d belong to the pixels A to D, respectively. However, the points A to C are virtual pixels which do not exist in reality.

3. The corresponding points A' to D' of the pixels A to D, which have already been defined at the 0-th level, are plotted in q$^{(1,s)}$. The pixels A' to C' are virtual pixels and regarded to be located at the same positions as the pixels A to C.

4. The corresponding point a' to the point a in the pixel A is regarded as being located inside the pixel A', and the point a' is plotted. Then, it is assumed that the position occupied by the point a in the pixel A (in this case, positioned at the upper right) is the same as the position occupied by the point a' in the pixel A'.

5. The corresponding points b' to d' are plotted by using the same method as the above 4 so as to produce an inherited quadrilateral defined by the points a' to d'.

6. The corresponding point x' of the point x is searched such that the energy becomes minimum in the inherited quadrilateral. Candidate corresponding points x' may be limited to the pixels, for instance, whose centers are included in the inherited quadrilateral. In the case shown in Fig. 14, the four pixels all become candidates.

The above described is a procedure for determining the corresponding point of a given point x. The same processing is performed on all other points so as to determine the submappings. As the inherited quadrilateral is expected to become deformed at the upper levels (higher than the second level), the pixels A' to D' will be positioned apart from one another as shown in Fig. 3.

Once the four submappings at the m-th level are determined in this manner, m is incremented (S22 in Fig. 12). Then, when it is confirmed that m does not exceed n (S23), return to S21. Thereafter, every time the process returns to S21, submappings at a finer level of resolution are obtained until the process finally returns to S21 at which time the mapping f$^{(n)}$ at the n-th level is determined. This mapping is denoted as f$^{(n)}$ ($\eta$ =0) because it has been determined relative to $\eta$=0.

Next, to obtain the mapping with respect to other different $\eta$, $\eta$ is shifted by $\Delta\eta$ and m is reset to zero (S24). After confirming that new $\eta$ does not exceed a predetermined search-stop value $\eta_{max}$ (S25), the process returns to S21 and the mapping f$^{(n)}$ ($\eta$= $\Delta\eta$) relative to the new $\eta$ is obtained. This process is repeated while obtaining f$^{(n)}$ ($\eta$ = $i\Delta\eta$) ($i$=0,1,...) at S21. When $\eta$ exceeds $\eta_{max}$, the process proceeds to S26 and the optimal $\eta$ = $\eta_{opt}$ is determined using a method described later, so as to let f$^{(n)}$ ($\eta$=$\eta_{opt}$) be the final mapping f$^{(n)}$.

Fig. 15 is a flowchart showing the details of the process of S21 shown in Fig. 12. According to this flowchart, the submappings at the m-th level are determined for a certain predetermined $\eta$. When determining the mappings, the optimal $\lambda$ is defined independently for each submapping in the base technology.

Referring to Fig. 15, s and $\lambda$ are first reset to zero (S210). Then, obtained is the submapping f$^{(m,s)}$ that minimizes the energy with respect to the then $\lambda$ (and, implicitly, $\eta$) (S211), and the thus obtained is denoted as f$^{(m,s)}$($\lambda$=0). In order to obtain the mapping with respect to other different $\lambda$, $\lambda$ is shifted by $\Delta\lambda$. After confirming that new $\lambda$ does not exceed a predetermined search-stop value $\lambda_{max}$ (S213), the process returns to S211 and the mapping f$^{(m,s)}$ ($\lambda$=$\Delta\lambda$) relative to the new $\lambda$ is obtained. This process is repeated while obtaining f$^{(m,s)}$($\lambda$=$i\Delta\lambda$) ($i$=0,1,...). When $\lambda$ exceeds $\lambda_{max}$, the process proceeds to S214 and the optimal $\lambda$=$\lambda_{opt}$ is determined , so as to let f$^{(n)}$( $\lambda$=$\lambda_{opt}$) be the final mapping f$^{(m,s)}$ (S214).

Next, in order to obtain other submappings at the same level, $\lambda$ is reset to zero and s is incremented (S215) . After confirming that s does not exceed 4 (S216), return to S211. When s=4, f$^{(m,0)}$ is renewed utilizing f$^{(m,3)}$ as described above and a submapping at that level is determined.

Fig. 16 shows the behavior of the energy $C_f^{(m,s)}$ corresponding to f$^{(m,s)}$($\lambda$=$i\Delta\lambda$)($i$=0,1,...) for a certain m and s while varying $\lambda$. Though described in [1.4], as $\lambda$ increases, $C_f^{(m,s)}$ normally decreases but changes to increase after $\lambda$ exceeds the optimal value. In this base technology, $\lambda$ in which $C_f^{(m,s)}$ becomes the minima is defined as $\lambda_{opt}$. As observed in Fig. 16, even if $C_f^{(m,s)}$ turns to decrease again in the range $\lambda$>$\lambda_{opt}$, the mapping will be spoiled by then and becomes meaningless. For this reason, it suffices to pay attention to the first occurring minima value. $\lambda_{opt}$ is independently determined for each submapping including f$^{(n)}$.

Fig. 17 shows the behavior of the energy $C_f^{(n)}$ corresponding to f$^{(n)}$($\eta$=$i\Delta\eta$) ($i$=0,1,...) while varying $\eta$. Here too, $C_f^{(n)}$ normally decreases as $\eta$ increases, but $C_f^{(n)}$ changes to increase after $\eta$ exceeds the optimal value. Thus, $\eta$ in which $C_f^{(n)}$ becomes the minima is defined as $\eta_{opt}$. Fig. 17 can be considered as an enlarged graph around zero along the horizontal axis shown in Fig. 4. Once $\eta_{opt}$ is determined, f$^{(n)}$ can be finally determined.

As described above, this base technology provides various merits. First, since there is no need to detect edges, problems in connection with the conventional techniques of the edge detection type are solved. Furthermore, prior knowledge about objects included in an image is not necessitated, thus automatic detection of corresponding points is achieved. Using the critical point filter, it is possible to preserve intensity and locations of critical points even at a coarse level of resolution, thus being extremely advantageous when applied to the object recognition, characteristic extraction, and image matching. As a result, it is possible to construct an image processing system which significantly reduces manual labors.

Some extensions to or modifications of the above-described base technology may be made as follows:

(1) Parameters are automatically determined when the matching is computed between the source and destination hierarchical images in the base technology. This method can be applied not only to the calculation of the matching between the hierarchical images but also to computing the matching between two images in general.

For instance, an energy $E_0$ relative to a difference in the intensity of pixels and an energy $E_1$ relative to a positional displacement of pixels between two images may be used as evaluation equations, and a linear sum of these equations, i.e., $E_{tot} = \alpha E_0 + E_1$, may be used as a combined evaluation equation. While paying attention to the neighborhood of the extrema in this combined evaluation equation, $\alpha$ is automatically determined. Namely, mappings which minimize $E_{tot}$ are obtained for various $\alpha$'s. Among such mappings, $\alpha$ at which $E_{tot}$ takes the minimum value is defined as an optimal parameter. The mapping corresponding to this parameter is finally regarded as the optimal mapping between the two images.

Many other methods are available in the course of setting up evaluation equations. For instance, a term which becomes larger as the evaluation result becomes more favorable, such as $1/E_1$ and $1/E_2$, may be employed. A combined evaluation equation is not necessarily a linear sum, but an n-powered sum (n=2, 1/2, -1, -2, etc.), a polynomial or an arbitrary function may be employed when appropriate.

The system may employ a single parameter such as the above $\alpha$, two parameters such as $\eta$ and $\lambda$ in the base technology or more than two parameters. When there are more than three parameters used, they are determined while changing one at a time.

(2) In the base technology, a parameter is determined in such a manner that a point at which the evaluation equation $C_f^{(m,s)}$ constituting the combined evaluation equation takes the minima is detected after the mapping such that the value of the combined evaluation equation becomes minimum is determined. However, instead of this two-step processing, a parameter may be effectively determined, as the case may be, in a manner such that the minimum value of a combined evaluation equation becomes minimum. In that case, $\alpha E_0 + \beta E_1$, for instance, may be taken up as the combined evaluation equation, where $\alpha + \beta = 1$ is imposed as a constraint so as to equally treat each evaluation equation. The essence of automatic determination of a parameter boils down to determining the parameter such that the energy becomes minimum.

(3) In the base technology, four types of submappings related to four types of critical points are generated at each level of resolution. However, one, two, or three types among the four types may be selectively used. For instance, if there exists only one bright point in an image, generation of hierarchical images based solely on $f^{(m,3)}$ related to a maxima point can be effective to a certain degree. In this case, no other submapping is necessary at the same level, thus the amount of computation relative on s is effectively reduced.

(4) In the base technology, as the level of resolution of an image advances by one through a critical point filter, the number of pixels becomes 1/4. However, it is possible to suppose that one block consists of 3X3 pixels and critical points are searched in this 3X3 block, then the number of pixels will be 1/9 as the level advances by one.

(5) When the source and the destination images are color images, they are first converted to monochrome images, and the mappings are then computed. The source color images are then transformed by using the mappings thus obtained as a result thereof. As one of other methods, the submappings may be computed regarding each RGB component.

[3] Improvements in the base technology

The base technology above may also be further refined or improved to yield more precise matching. Some improvements are hereinafter described.

[3.1] Critical point filters and subimages considering color information

The critical point filters of the base technology may be revised to make effective use of the color information in the images. First, a color space is introduced using HIS (hue, intensity, saturation), which is considered to be closest to human intuition. However, a formula for intensity "Y" which is considered closest to human visual sensitivity is used instead of "I", for the transformation of color into intensity.

$$H = \frac{\frac{\pi}{2} - \tan^{-1}\left(\frac{2R - G - R}{\sqrt{3(G-B)}}\right)}{2\pi}$$

$$I = \frac{R+G+B}{3}$$

$$S = 1 - \frac{\min(R,G,B)}{3}$$

$$Y = 0.299 \times R + 0.587 \times G + 0.114 \times B$$

$$--- \quad (53)$$

Here, the following definitions are made, in which the intensity Y and the saturation S at a pixel "a" are respectively denoted by Y(a) and S(a).

$$\alpha_Y(a,b) = \begin{cases} a \cdots (Y(a) \leq Y(b)) \\ b \cdots (Y(a) > Y(b)) \end{cases}$$

$$\beta_Y(a,b) = \begin{cases} a \cdots (Y(a) \geq Y(b)) \\ b \cdots (Y(a) < Y(b)) \end{cases}$$

$$\beta_S(a,b) = \begin{cases} a \cdots (S(a) \geq S(b)) \\ b \cdots (S(a) < S(b)) \end{cases}$$

$$--- \quad (54)$$

The following five filters are then prepared based on the definition described above.

$$p_{(i,j)}^{(m,0)} = \beta_Y(\beta_Y(p_{(2i,2j)}^{(m+1,0)}, p_{(2i,2j+1)}^{(m+1,0)}), \beta_Y(p_{(2i+1,2j)}^{(m+1,0)}, p_{(2i+1,2j+1)}^{(m+1,0)}))$$

$$p_{(i,j)}^{(m,1)} = \alpha_Y(\beta_Y(p_{(2i,2j)}^{(m+1,1)}, p_{(2i,2j+1)}^{(m+1,1)}), \beta_Y(p_{(2i+1,2j)}^{(m+1,1)}, p_{(2i+1,2j+1)}^{(m+1,1)}))$$

$$p_{(i,j)}^{(m,2)} = \beta_Y(\alpha_Y(p_{(2i,2j)}^{(m+1,2)}, p_{(2i,2j+1)}^{(m+1,2)}), \alpha_Y(p_{(2i+1,2j)}^{(m+1,2)}, p_{(2i+1,2j+1)}^{(m+1,2)}))$$

$$p_{(i,j)}^{(m,3)} = \alpha_Y(\alpha_Y(p_{(2i,2j)}^{(m+1,3)}, p_{(2i,2j+1)}^{(m+1,3)}), \alpha_Y(p_{(2i+1,2j)}^{(m+1,3)}, p_{(2i+1,2j+1)}^{(m+1,3)}))$$

$$p_{(i,j)}^{(m,4)} = \beta_S(\beta_S(p_{(2i,2j)}^{(m+1,4)}, p_{(2i,2j+1)}^{(m+1,4)}), \beta_S(p_{(2i+1,2j)}^{(m+1,4)}, p_{(2i+1,2j+1)}^{(m+1,4)}))$$

$$--- \quad (55)$$

The top four filters in (55) are almost the same as those in the base technology, and accordingly, critical points of intensity are preserved with color information. The last filter preserves critical points of saturation, also together with the color information.

At each level of resolution, five types of subimage are generated by these filters. Note that the subimages at the highest level are consistent with the original image.

$$p_{(i,j)}^{(n,0)} = p_{(i,j)}^{(n,1)} = p_{(i,j)}^{(n,2)} = p_{(i,j)}^{(n,3)} = p_{(i,j)}^{(n,4)} = p_{(i,j)} \qquad --- (56)$$

[3.2] Edge images and subimages

An edge detection filter using the first order derivative is further introduced to incorporate information related to edges for matching. This filter can be obtained by convolution integral with a given operator G. The following 2 filters related to horizontal and vertical derivative for an image at n-th level are described as follows:

$$p_{(i,j)}^{(n,h)} = Y(p_{(i,j)}) \otimes G_h$$
$$p_{(i,j)}^{(n,v)} = Y(p_{(i,j)}) \otimes G_v \qquad --- (57)$$

Although G may be a typical operator used for edge detection in image analysis, the following was used in consideration of the computing speed, in this improved technology.

$$G_h = \frac{1}{4} \begin{bmatrix} 1 & 0 & -1 \\ 2 & 0 & -2 \\ 1 & 0 & -1 \end{bmatrix}$$
$$\qquad --- (58)$$
$$G_v = \frac{1}{4} \begin{bmatrix} 1 & 2 & 1 \\ 0 & 0 & 0 \\ -1 & -2 & -1 \end{bmatrix}$$

Next, the image is transformed into the multiresolution hierarchy. Because the image generated by the edge detection filter has an intensity with a center value of 0, the most suitable subimages are the mean value images as follows:

$$p_{(i,j)}^{(m,h)} = \frac{1}{4}(p_{(2i,2j)}^{(m+1,h)} + p_{(2i,2j+1)}^{(m+1,h)} + p_{(2i+1,2j)}^{(m+1,h)} + p_{(2i+1,2j+1)}^{(m+1,h)})$$
$$\qquad --- (59)$$
$$p_{(i,j)}^{(m,v)} = \frac{1}{4}(p_{(2i,2j)}^{(m+1,v)} + p_{(2i,2j+1)}^{(m+1,v)} + p_{(2i+1,2j)}^{(m+1,v)} + p_{(2i+1,2j+1)}^{(m+1,v)})$$

The images described in equation (59) are introduced to the energy concerning the edge difference in the energy function for computation during the "forward stage", the stage in which an initial submapping is derived, as will hereinafter be described in more detail.

The magnitude of the edge, i.e., the absolute value is also necessary for the calculation. It is denoted as follows:

$$p_{(i,j)}^{(n,e)} = \sqrt{(p_{(i,j)}^{(n,h)})^2 + (p_{(i,j)}^{(n,v)})^2} \qquad\qquad --- \ (60)$$

Because this value will always be positive, a maximum value filter can be used for the transformation into the multires-olutional hierarchy.

$$p_{(i,j)}^{(m,e)} = \beta_Y(\beta_Y(p_{(2i,2j)}^{(m+1,e)}, p_{(2i,2j+1)}^{(m+1,e)}), \beta_Y(p_{(2i+1,2j)}^{(m+1,e)}, p_{(2i+1,2j+1)}^{(m+1,e)})) \qquad --- \ (61)$$

The image described in equation (61) is introduced in the course of determining the order of the calculation in the "forward stage" described below.

[3.3] Computing procedures

The computing proceeds in order from the subimages with the coarsest resolution. The calculations are performed more than once at each level of the resolution due to the five types of subimages. This is referred to as a "turn", and the maximum number of turns is denoted by t. Each turn includes energy minimization calculations both in a "forward stage" mentioned above, and in a "refinement stage", that is, a stage in which the submapping is recomputed based on the result of the forward stage. Fig. 18 shows a flowchart related to the improved technology illustrating the computation of the submapping at the m-th level.

As shown in the figure, s is set to zero (S40) initially. Then the mapping $f^{(m,s)}$ of the source image to the destination image, and the mapping $g^{(m,s)}$ of the destination image to the source image are respectively computed by energy minimization in the forward stage (S41). The computation for $f^{(m,s)}$ is hereinafter described. The energy minimized in this improvement technology is the sum of the energy C, concerning the value of the corresponding pixels, and the energy D, concerning the smoothness of the mapping.

$$\min_f (C^f(i,j) + D^f(i,j)) \qquad\qquad --- \ (62)$$

In this improved technology, the energy C includes the energy $C_I$ concerning the intensity difference, which is the same as the energy C in the base technology described in sections [1] and [2] above, the energy $C_C$ concerning the hue and the saturation, and the energy $C_E$ concerning the edge difference. These energies are described as follows:

$$C_I^f(i,j) = \left| Y(p_{(i,j)}^{(m,s)}) - Y(q_{f(i,j)}^{(m,s)}) \right|^2$$

$$C_C^f(i,j) = \left| S(p_{(i,j)}^{(m,s)})\cos(2\pi H(p_{(i,j)}^{(m,s)})) - S(q_{f(i,j)}^{(m,s)})\cos(2\pi H(q_{f(i,j)}^{(m,s)})) \right|^2$$

$$+ \left| S(p_{(i,j)}^{(m,s)})\sin(2\pi H(p_{(i,j)}^{(m,s)})) - S(q_{f(i,j)}^{(m,s)})\sin(2\pi H(q_{f(i,j)}^{(m,s)})) \right|^2$$

$$C_E^f(i,j) = \left| p_{(i,j)}^{(m,h)} - q_{f(i,j)}^{(m,h)} \right|^2 + \left| p_{(i,j)}^{(m,v)} - q_{f(i,j)}^{(m,v)} \right|^2$$

$$C^f(i,j) = \lambda C_I^f(i,j) + \psi C_C^f(i,j) + \theta C_E^f(i,j)$$

$$--- \ (63)$$

The parameters $\lambda$, $\psi$, and $\theta$ are real numbers more than 0, and they have constant values in this improved technology. This constancy was achieved by the refinement stage introduced in this technology, which leads to more stable calculation result. Energy $C_E$ is determined from the coordinate (i,j) and the resolution level m, and independent of the type of mapping $f^{(m,s)}$, "s".

The energy D is similar to that in the base technology described above. However, in the base technology, only the adjacent pixels are taken into account when the energy $E_1$, which deals with the smoothness of the images, is derived, whereas, in this improved technology, the number of ambient pixels taken into account can be set as a parameter d.

$$E_0^f(i,j) = \left\| f(i,j) - (i,j) \right\|^2$$

$$E_1^f(i,j) = \sum_{i'=i-d}^{i+d} \sum_{j'=j-d}^{j+d} \left\| \left( f(i,j) - (i,j) \right) - \left( f(i',j') - (i',j') \right) \right\|^2 \quad --- \quad (64)$$

In preparation for the refinement stage, the mapping $g^{(m,s)}$ of the destination image q to the source image p is also computed in the forward stage.

In the refinement stage (S42), a more appropriate mapping $f'^{(m,s)}$ is computed based on the bidirectional mappings, $f^{(m,s)}$ and $g^{(m,s)}$, which were previously computed in the forward stage. In this refinement stage, an energy minimization calculation for an energy M is performed. The energy M is the sum of the energy $M_0$, concerning the degree of conformation to the mapping g of the destination image to the source image, and the energy $M_1$, concerning the difference from the initial mapping. Then, obtained is the submapping $f'^{(m,s)}$ that minimizes the energy M.

$$M_0^{f'}(i,j) = \left\| g(f'(i,j)) - (i,j) \right\|^2$$

$$M_1^{f'}(i,j) = \left\| f'(i,j) - f(i,j) \right\|^2$$

$$M^{f'}(i,j) = M_0^{f'}(i,j) + M_1^{f'}(i,j)$$

$$--- \quad (65)$$

The mapping $g'^{(m,s)}$ of the destination image q to the source image p is also computed in the same manner, so as not to distort in order to maintain the symmetry.

Thereafter, s is incremented (S43), and if s does not exceed t(S44), the computation proceeds to the forward stage in the next turn (S41). In so doing, the energy minimization calculation is performed using a substituted $E_0$, which is described as follows:

$$E_0^f(i,j) = \left\| f(i,j) - f'(i,j) \right\|^2 \qquad --- \quad (66)$$

[3.4] Order of mapping calculation

Because the energy concerning the mapping smoothness, $E_1$, is computed using the mappings of the ambient points, the energy depends on whether those points are previously computed or not. Therefore, the total mapping preciseness significantly depends on the point from which the computing starts and the order in which points are processed. In order to overcome this concern, an image having an absolute value of edge (see equation (61)) is introduced. Because the edge generally has a large amount of information, the mapping calculation proceeds from a point at which the absolute value of edge is the largest. This technique about the order of mapping calculation can make the mapping extremely precise, in particular, for binary images and the like.

[Embodiments of motion image encoding and decoding]

Now motion image processing partially using Base Technology is described.

Embodiment 1

Fig. 19 shows the configuration and the process according to a motion image encoding apparatus and a decoding apparatus. The upper part and the lower part of the figure correspond to the encoder and the decoder, respectively.

[1] Encoder Configuration

CPF: Critical Point Filter of Base Technology. CPF is an image matching processor. CPF calculates the matching on a pixel basis and outputs corresponding point information. This information is output as a file in which correspondence is described between each point or pixel of the source image and each point or pixel of the destination image. Morphing image between the key frames can be obtained interpolating the locations and the pixel values for each set of corresponding pixels.

The information of the file can be applied only to the source key frame. In such a case, morphing image can still be obtained where each pixel of the source key frame gradually moves toward its corresponding pixel specified in the file. Interpolation is conducted only in terms of the locations of the corresponding pixels.

Naturally any image matching processor can be used besides CPF. Accurate processors, however, should be used and Base Technology meets this requirement.

DE: Differential (error) Encoder. DE fulfills variable-length encoding on the deference data between two image frames using Huffman encoding or the like employing statistical methods

NR: maskable Noise Reducer. Human eyes often overlook subtle change in images. It is known that small error in luminosity is hardly perceivable in regions where the change in luminosity is large or where high special frequency component is dominant. Various types of noises are included in motion image. Such noise data have no meaning as a component of an image. It is therefore important to neglect such visually meaningless random information or "visually maskable information" to achieve higher compression ration.

Quantization in today's block matching utilizes the maskable information in terms of luminosity. There are, however, other maskable information. NR utilizes visually maskable information with regard to special location information and temporal location information. The former information relates to the fact that the phase component in special frequency is less perceivable in a complicated image with large range of luminosity. The latter information relates to the fact that data shift in time axis is less perceivable in a region where the change in time axis is large. A predetermined threshold is introduced to detect such information in both cases.

At least the present MPEG scheme based on block matching and differential encoding cannot easily utilize these masks. The decoding process in Base Technology on the other hand generates changes in motion image by tri-linear or other interpolation to avoid discontinuity which brings visual artifacts in motion image. This process makes the noise less perceivable by diffusing the error not only in the luminosity axis but also in the special and temporal axes. NR thus is especially useful when combined with Base Technology.

DD: Differential Decoder. DD decodes the differential data encoded by DE and adds the differential data to the image frame from which the differential data were derived.

Other than the aforementioned functions, a pixel shifter is provided to generate a virtual key frame applying the corresponding point information to a certain single key frame and by shifting pixels of the single key frame.

[2] Encoding

In Fig. 19, "F0" and the like are frames to be processed in a motion image. "M0-4" is the corresponding point information between F0 and F4 generated by CPF. Encoding process proceeds as follows.

a) generating by CPF corresponding point information (M0-4) between the first and the second key frames (F0, F4) which have at least one image frame (F1-F3) in-between, by calculating matching between the first and the second frames,

b) generating a virtual second frame (F4') by the pixel shifter shifting points in the first key frame (F0) using the corresponding point information (M0-4),

c) encoding compressing by DE with NR function ("DE+NR") the difference data between the actual second and the virtual second key frames (F4, F4'), and

d) outputting, as encoded date between the first and the second key frames, the first key frame (F0), the corresponding point information (M0-4) and the encoded compressed difference data (delta 4) between the actual second and the virtual second key frames (F4, F4').

At the step d), the target of the output data may be storage media or transmission media. In reality, data obtained at the step j) described later will be combined to form encoded motion image data, which will be output to storage media or the like.

The following process is conducted on the second key frame (F4) and subsequent key frames.

e) decoding by DD the encoded compressed differential data (delta 4) between the actual second and virtual second key frames (F4, F4'),

f) generating by DD an improved virtual second key frame (F4") using the decoded differential data and the virtual second key frame (F4'),

g) generating by CPF corresponding point information (M4-8) between the second and the third key frames (F4, F8) which have at least one image frame (F5-F7) in-between, by calculating matching between the second and the third frames,

h) generating a virtual third frame (F8') by the pixel shifter shifting points in the improved second key frame (F4") using the corresponding point information (M4-8),

i) encoding compressing by DE+NR the difference data between the actual third and the virtual third key frames (F8, F8'), and

j) outputting, as encoded date between the second and the third key frames (F4,F8), the corresponding point information (M4-8) and the encoded compressed difference data (delta 8) between the actual third and the virtual third key frames. The encoded data is output to a certain device which may be the same device to which the step d) above outputs the data.

Until the process reaches the final key frame in a predetermined group of images, the said steps e) to j) are repeatedly conducted to the frame F9 and subsequent frames shown in Fig. 19. The final frame is a group corresponds to the final frames in one group of pictures or GOP in MPEG. The next frame immediately following the final frame becomes the first key frame in the next group and the steps a) to j) are fulfilled. Thus only one picture, the first key frame, which corresponds to an I picture in MPEG has to be encoded and transmitted in each group (hereinafter simply referred to as "group") of images or pictures, which corresponds to GOP in MPEG.

[3] Decoder Configuration

A decoder is straightforward.
DD: The same as DD in the encoder.
INT: Interpolator.
Pixel shifter: The same as the pixel shifter in the encoder.

Intermediate frames are generated from two image frames by interpolation using the corresponding point information.

{4} Decoding

Decoding process proceeds as follows.

k) obtaining, from a transmission medium or a storage medium, the first key frame (F0) and corresponding point information (M0-4) between the first and the second key frames (F0, F4) which have image frames (F1-F3) in-between,

1) generating a virtual second frame (F4') shifting points in the first key frame (F0) using the corresponding point information (M0-4),

m) obtaining, from an encoding side which has done the step 1) or the like, encoded compressed difference data (delta 4) between the actual second and the virtual second key frames (F4, F4'),

o) generating an improved virtual second key frame (F4") by decoding the obtained encoded compressed difference data (delta 4) by DD and adding the virtual second key frame (F4') thereto,

p) generating intermediate frames (F1"-F3") which should exist between the first and the improved virtual second key frames (F0, F4") interpolating by INT the first key frame (F0) and the improved second key frame (F4") using the corresponding point information (M0-4), and

q) outputting to a display apparatus or the like, the first key frame (F0), the generated intermediate frames (F1'-F3') and the improved second key frame (F4"), as decoded data between the first and the improved virtual second key frames (F0, F4").

Processing on the second key frame (F4) and subsequent frames is then conducted in the following steps.

r) obtaining the corresponding point information (M4-8) between the second and the third key frames (F4, F8) which have image frames (F5-F7) in-between,

s) generating a virtual third frame (F8') shifting points in the improved virtual second key frame (F4") using the corresponding point information (M4-8),

t) obtaining, from an encoding side which has done the step s) or the like, encoded compressed difference data (delta 8) between the actual third and the virtual third key frames (F8, F8'),

u) generating an improved virtual third key frame (F8") by decoding the obtained encoded compressed difference data (delta 8) by DD and adding the virtual third key frame (F4') thereto,

v) generating intermediate frames (F5'-F7') which should exist between the improved virtual second and third key frames (F4", F8") interpolating by INT the improved virtual second key frame (F4") and the improved third key frame (F4") using the corresponding point information (M4-8), and

w) outputting to a display apparatus or the like, the improved second key frame (F4"), the generated intermediate frames (F5'-F7') and the improved third key frame (F8"), as decoded data between the virtual improved second and third key frames (F4", F8").

The steps r) to w) are recursively conducted on the frame F9 and still later frames shown in Fig. 9 until the process reaches to the last frame in one group. In the next group, the leading frame is handled as the first key frame in the group and the step k) and later steps are again processed.

[5] Merits of Embodiment 1

High compression is achieved by employing the Base technology CPF, as the matching accuracy of CPF is high. Statistical deviation becomes large as the difference to be compressed by DE+NR becomes small by CPF.

Block noise, which is problematic in MPEG, is avoided by CPF as it does not employ block matching. Approaches other than CPF independent on block matching can be adopted naturally.

MPEG works only to minimize the difference between frames while CPF detects correspondence between points which actually corresponds to each other. This feature enables CPF to ultimately achieve higher compression ratio than MPEG.

An encoder is simple provided with an image matching processor, a difference encoder with noise reduction function, a difference decoder and an image shifter. A decoder is also simple provided with an interpolation processor, a difference decoder and an image shifter. The load of the decoder is light as it need not to match images.

Only one complete key frame is necessary for each group as the difference "delta 4", "delta 8" and the like between a generated virtual key frame and its corresponding actual key frame is included in encode data. Error is not accumulated even when a long motion image is processed and even though only one complete key frame is encoded in each frame.

[6] Variations to Embodiment 1

Intermediate frames (F1-F3) which are between the first and second key frames (F0, F4) may be considered when producing the corresponding point information conducting matching calculation (shown with a broken line in Fig. 19). CPF first calculates matching for each set of (F0, F1), (F1, F2), (F2, F3) and (F3, F4) and produces four files, which are hereinafter referred to as "partial files M0-M3". The four partial files are then unified to a single file as a corresponding point information file.

For the unification, it is specified for each pixel on the frame F0 where to be relocated on the frame F1 by the partial file M0. It is then specified for the specified each pixel on the frame F1 where to be relocated on the frame F2 by the partial file M1. The same relocation is continued until F4, each pixel on F0 is relocated on F4 by the four partial files to achieve higher accuracy. Matching accuracy between directly adjacent frames is generally higher than the accuracy between F0 and F4 as these two frames have more distance. In this variation, the corresponding point information may be expressed with a mathematical function on time.

(Second Embodiment)

This embodiment relates to the encoder of Fig. 19. Here "matching energy" is introduced to measure the accuracy of the image matching and is utilized in noise reduction at DE+NR. Fig. 1 is again referred to. Elements or functions not explained here are similar to those in Embodiment 1.

Matching energy is defined by the distance in geometry and the difference in pixel value between corresponding points. One example is shown in Equation 49 in Base Technology. Embodiment 2 uses this matching energy obtained during image matching by CPF. In Base Technology, the corresponding point or pixel in a key frame is detected in a different key frame so that the mapping energy between the two points becomes minimum. Generally, matching is accurate for pixels with low matching energy and is inaccurate for pixels with high energy. Pixels with high energy have large distance or large difference in pixel value. Mismatching may have occurred for such pixels. Compression ratio for image regions with high matching accuracy is set high in the present embodiment. In another embodiment, difference information is highly compressed for pixels which are estimated to have been mismatched.

[1] Encoding

The encoder according to Embodiment 2 obtains matching energy for each pixel when CPF calculates matching between the first and second key frames. The encoder generates on the first key frame (F0) an energy map describing matching energy for each pixel. Between other adjacent key frames, the encoder generates energy maps which describe matching energy for each set of corresponding points. Energy map is therefore data which represent matching energy of corresponding points between key frames and which accompany with the temporally former key frame of the two key frames. Energy map, however, may accompany with the latter of the two key frames.
The energy map is transmitted to DE+NR from CPF via a predetermined route (not shown). DE+NR evaluates whether the matching between key frames was satisfactory or not using the energy map. DE+NR then adaptively compresses the difference between a virtual and an actual key frames. The corresponding point file is also transmitted to DE+NR via a route not shown.
Fig. 20 shows the configuration of DE+NR according to the present embodiment. DE+NR comprises a difference calculator 10, a difference data compressor 12, an energy obtaining unit 14 and a judging unit 16. The difference calculator 10 and the difference data compressor 12 correspond to DE and the energy obtaining unit 14 and the judging unit 16 to NR. Now the process of DE+NR to encode the first and second key frames (F0, F4) and the intermediate frames (F1-F3). DE+NR works in the same manner on the later frames.
The difference calculator 10 obtains the actual second key frame (F4) and the virtual second key frames (F4') and calculates the difference of sets of pixels between the two frames, each pixel of a set residing at the same position in a frame. Thus a kind of an image is produced. This image has pixel values of pixels, each value representing the difference between the two key frames. This image is referred to as a "difference image". The difference image is transmitted to the energy obtaining unit 14. The energy map and corresponding point information (M0-4) between the actual first and second key frames (F0, F4) is input to the energy obtaining unit 14 from CPF shown in Fig. 19. Using these data, the energy obtaining unit 14 obtains the matching energy of the difference image.
The energy obtaining unit 14, using M0-4, tracks from the difference image via the virtual second key frame (F4') to the first key frame (F0) . The energy obtaining unit 14 thus specifies the correspondence of pixels between the difference image and the first key frame (F0). The energy obtaining unit 14 obtains the matching energy of pixels of the difference image by defining the energy of a pixel in the difference image is the energy of a pixel to which the pixel in the difference image is tracked back.
The energy obtaining unit 14 transmits the matching energy of the difference image to the judging unit 16. The judging unit 16 judges on the basis of the matching energy of pixels which regions of the difference image should be target regions for high compression. The target regions are informed to the difference data compressor 12. The judging unit 16 first divides the difference image into blocks of 16 x 16 pixels. The judging unit 16 compares matching energy of all pixels in each block with a predetermined threshold. The judging unit 16 determines regions with the matching energy of all pixels being below the threshold as the target for high compression.
The difference data compressor 12 compresses the difference image in JPEG format. The difference data compressor 12 adaptively switches compression ratio using the information on the target for high compression taught by the judging unit 16. More specifically, the judging unit 16 may adopt for the high compression regions a larger quantization step of DCT coefficients. In another embodiment, the difference data compressor 12 may first replace the pixel values in the high compression regions to zero and then compresses in the JPEG format.
High compression can be applied to low matching energy regions as the matching result is usually high in such regions. Difference between the actual and virtual second key frames (F4, F4') may be regarded as noise, which is safely deleted by high compression. Regions with high matching energy may, however, include serious mismatching. Compression ratio for such regions is set to be low in order not to delete important difference information to keep high image quality at decoding.

[2] Merits of Embodiment 2

The 18 outputs compressed encoded difference (delta 4) between the actual and virtual key frames (F4, F4'). The encoder according to the present embodiment can adaptively compress considering the importance of the difference information to maintain the accuracy at decoding. The encoder thus achieves high compression efficiency while keeping high image quality.

[3] Variations to Embodiment 2

It is often observed that mismatching has occurred to a pixel whose matching energy is large and especially whose correspondence vector is considerably different from those of neighboring pixels. The difference in correspondence vector may be introduced to judge if mismatching has occurred and noise reduction may be conducted on mismatched pixels. DE+NR may compare the matching energy of each pixel with the average of the matching energy of pixels in the 9 x 9 block with the pixel under examination residing at its center. It may be judged that the pixel under examination is a mismatched pixel when the energy of the pixel is beyond the average by a predetermined threshold.

Corresponding point information on the mismatched pixel is meaningless for the decoder. Such part of difference data between the actual and virtual second key frames (F4, F4') is just a noise, and is highly compressed by DE+NR. Mismatching can be judged from motion vectors. A pixel having a motion vector which is considerably different from those of the surrounding pixels may be judged as a mismatched pixel.

In Embodiment 2, like Embodiment 1, Intermediate frames (F1-F3) between the first and second key frames (F0, F4) may be considered when producing the corresponding point information conducting matching calculation. Four files (M0-M3) are first generated and are then unified to a single file as a corresponding point information file.

When considering intermediate frames, matching energy calculated between adjacent image frames may be applicable to detect a scene change. To detect a scene change, CPF first calculates matching for each set of (F0, F1), (F1, F2), (F2, F3) and (F3, F4) and obtains four energy maps E0, E1, E2 and E3. The average of matching energy through all pixels in one image frame is then calculated and compared with a predetermined threshold for scene change detection. For example, the average energy through the frame F5 is calculated based on the energy map E5 generated between F5 and F6. A new next group is made and the frame F6 is made the first key frame in the next group when the average energy calculated through F5 exceeds the threshold, as it is considered that a scene change has occurred between F5 and F6. Automatic scene detection is thus possible. Grouping of image frames on the basis of scene changes becomes possible.

An image frame may be registered as a new key frame when the sum of average matching energy of frames, when summed from temporally earlier frames, comes to exceed a predetermined threshold. Image quality at decoding is improved by adding new key frames when accumulated difference between images exceeds a predetermined value.

**INDUSTRIAL USABILITY**

This invention is applicable to image encoding and decoding.

**Claims**

**1.** Motion image encoding method comprising:

a) generating corresponding point information between the first and the second key frames which have at least one image frame in-between, by calculating matching between the first and the second frames,
b) generating a virtual second frame shifting pixels in the first key frame using the corresponding point information,
c) encoding compressing the difference data between the actual second key frame and the virtual second key frame, and
d) outputting, as encoded date between the first and the second key frames, the first key frame, the corresponding point information and the encoded compressed difference data between the actual second key frame and the virtual second key frame.

**2.** The method of Claim 1 further comprising:

e) decoding the encoded compressed differential data between the actual second key frame and the virtual second key frame,
f) generating an improved virtual second key frame using the decoded differential data and the virtual second key frame,
g) generating corresponding point information between the second and the third key frames which have at least one image frame in-between, by calculating matching between the second and the third frames,
h) generating a virtual third frame shifting pixels in the improved second key frame using the corresponding point information,

i) encoding compressing the difference data between the actual third key frame and the virtual third key frame, and

j) outputting, as encoded date between the second and the third key frames, the corresponding point information and the encoded compressed difference data between the actual third key frame and the virtual third key frame.

3. The method of Claim 2, wherein the processes e) to j) are repeatedly conducted on subsequent key frames.

4. The method of Claim 3, wherein the processes e) to j) are conducted until the process reaches to the last key frame of a predetermined group and wherein the process a) and the following processes are conducted on subsequent key frames, handling the key frame immediately following the last key frame as a new first key frame.

5. A motion image decoding method comprising:

k) obtaining the first key frame and corresponding point information between the first and the second key frames which have at least one image frame in-between,

1) generating a virtual second frame shifting pixels in the first key frame using the corresponding point information,

m) obtaining, from an encoding side, encoded compressed difference data between the actual second key frame and the virtual second key frame

o) generating an improved virtual second key frame using the obtained encoded compressed difference data and the virtual second key frame,

p) generating at least one intermediate frame which should exist between the first and the second key frames interpolating the first key frame and the improved second key frame using the corresponding point information, and

q) outputting, as decoded data between the first and the second key frames, the first key frame, the generated at least one intermediate frame and the improved second key frame.

6. The method of Claim 5, further comprising:

r) obtaining the corresponding point information between the second and the third key frames which have at least one image frame in-between,

s) generating a virtual third frame shifting pixels in the improved virtual second key frame using the corresponding point information,

t) obtaining, from an encoding side, encoded compressed difference data between the actual third key frame and the virtual third key frame,

u) generating an improved virtual third key frame using the obtained encoded compressed difference data and the virtual third key frame,

v) generating at least one intermediate frame which should exist between the improved virtual second and third key frames interpolating the improved virtual second key frame and the improved third key frame using the corresponding point information between the second and the third key frames, and

w) outputting the improved second key frame, the generated at least one intermediate frame and the improved third key frame, as decoded data between the virtual improved second and third key frames.

7. The method of Claim 6, wherein the processes r) to w) are repeatedly conducted on subsequent key frames.

8. The method of Claim 7, wherein the processes r) to w) are conducted until the process reaches to the last key frame of a predetermined group and wherein the process k) and the following processes are conducted on subsequent key frames, handling the key frame immediately following the last key frame as a new first key frame.

9. Computer program which makes a computer execute the processes defined in Claim 1.

10. Computer program which makes a computer execute the processes defined in Claim 5.

11. The method of Claim 1, further comprising:

evaluating the accuracy of the matching conducted In the process a) and

switching the encoding scheme of the process c) dependent on the evaluation.

12. The method of Claim 11 wherein compression ratio for part of the difference data between the actual second key frame and the virtual second key frame, the part being evaluated to have high matching accuracy, is set high.

**13.** The method of Claim 11 wherein the evaluation process comprises:

comparing a parameter representing correspondence degree for each set of pixels corresponding between the first and the second key frames with parameters of sets of adjacent pixels,
detecting the set of pixels under comparison as a mismatched set when the parameter thereof is beyond the parameters of the adjacent sets by a predetermined threshold, and
setting high compression ratio for part of the difference data between the actual second key frame and the virtual second key frame, the part including the detected mismatched set.

**14.** The method of Claim 11 wherein the evaluation process evaluates the accuracy of the matching on the basis of the matching energy.

**15.** The method of Claim 14 wherein the matching energy is calculated on the basis of the distance and the difference in pixel values between pixels.

**16.** The method of Claim 1 further comprising:

calculating matching for each set of adjacent image frames existing between the first and the second key frames,
obtaining a matching energy parameter of each frame from the matching result,
summing the parameter from temporally earlier frames, and
registering an image frame as a new key frame if the summed parameter exceeds a predetermined threshold when the parameter of the image frame is added to the immediately preceding summed parameter.

**17.** The method of Claim 16 wherein the same processes are conducted on the second and later key frames.

**18.** The method of Claim 4 further comprising:

calculating matching for each set of adjacent image frames,
obtaining a matching energy parameter of each frame from the matching result, and
determining an image frame whose parameter exceeds a predetermined threshold as the last image frame of the group.

**19.** A motion image encoding method for encoding at least the third key frame using the region-based matching result conducted between the first and the second key frames, comprising:

judging the accuracy of the matching on a region by region basis, and
selecting a quantization scheme on a region by region basis dependent on the judged accuracy of each region.

Fig.1a Fig.1b

Fig.1c Fig.1d

Fig.1e Fig.1f

Fig.1g Fig.1h

Fig.1i Fig.1j

Fig.2R

Fig.2A

Fig.2E

Fig.2B

Fig.2D

Fig.2C

$f^{(m-1,s)}$     $f^{(m-1,s)}$     source image

$f^{(m-1,s)}$

$f^{(m-1,s)}$     destination image

A     B     C     D

A'     B'     C'     D'

the inherited quadrilateral

Fig. 3

**X Graph**

Fig.4

## Fig.5a

## Fig.5b

START

S1

MULTI-
RESOLUTIONAL
FILTERING

S2

IMAGE MATCHING

END

## Fig. 6

START S1

S10

HIERARCHIZE
SOURCE IMAGE

S11

HIERARCHIZE
DESTINATION IMAGE

END S1

## Fig. 7

Fig. 8

p(m, s)

p(m-1, 0)

p(m-1, 1)

p(m-1, 2)

p(m-1, 3)

Fig. 9

Fig. 10

START PREPARA-
TION FOR S2

S30

SET TWO OR MORE
EVALUATION EQUATIONS

S31

SET INTEGRAL
EVALUATION EQUATION

END PREPARA-
TION FOR S2

Fig.11

Fig.12

Fig.13

Fig.14

START S21

$s \leftarrow 0$
$\lambda \leftarrow 0$ ⟞ S210

S211

COMPUTE
$f^{(m,s)} (\lambda = i\Delta\lambda)$

$\lambda \leftarrow \lambda + \Delta\lambda$ ⟞ S212

S213

$\lambda > \lambda_{max}$? ── N

Y

S214

DETERMINE
$\lambda_{opt}$ AND $f^{(m,s)}$

$\lambda \leftarrow 0$
$s \leftarrow s+1$ ⟞ S215

S16

$s > 4$? ── N

Y

END S21

Fig.15

Fig.16

Fig.17

START

s ← 0 — S40

COMPUTE $f^{(m,s)}$ AND $g^{(m,s)}$
(FORWARD STAGE) — S41

COMPUTE $f'^{(m,s)}$ AND $g'^{(m,s)}$
(REFINEMENT STAGE) — S42

s ← s+1 — S43

N

s > t ? — S44

Y

END

**Fig. 18**

**Fig.19**

ENERGY MAP,
F4、F4'        CORRESPONDING POINT INFORMATION

10                                14

DIFFERENCE                    ENERGY OBTAINING UNIT
CALCULATOR

12                                16

DIFFERENCE                         JUDGING
COMPRESSOR                          UNIT

DE+NR

△4

# Fig.20

## INTERNATIONAL SEARCH REPORT

International application No.

PCT/JP2005/005941

| A. CLASSIFICATION OF SUBJECT MATTER |
|---|
| Int.Cl$^7$ H04N7/36 |
| According to International Patent Classification (IPC) or to both national classification and IPC |

| B. FIELDS SEARCHED |
|---|
| Minimum documentation searched (classification system followed by classification symbols) |
| Int.Cl$^7$ H04N7/24-68 |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 8-107558 A (NEC Corp.),<br>23 April, 1996 (23.04.96),<br>Full text; all drawings<br>(Family: none) | 1-10<br>11-18 |
| A | JP 10-304374 A (Sharp Corp.),<br>13 November, 1998 (13.11.98),<br>Par. Nos. [0058] to [0061]; Fig. 1<br>& US 6052417 A & EP 874525 A | 11-18 |
| A | JP 2001-128179 A (NEC Corp.),<br>11 May, 2001 (11.05.01),<br>Par. Nos. [0043] to [0047]; Fig. 3<br>& US 6611558 B1 | 11-18 |

☐ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>09 September, 2005 (09.09.05) | Date of mailing of the international search report<br>27 September, 2005 (27.09.05) |
|---|---|
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

| International application No. |
|---|
| PCT/JP2005/005941 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
    The inventions of claims 1-18 relate to a method or a program for outputting a first key frame, the corresponding point information between the first and the second key frame, and a compressed/encoded difference between the actual second key frame and the virtual second key frame as encoded data between the key frames, or a method or a program for decoding the encoded data.
    The invention of claim 19 relates to a method for encoding the third image frame.

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1-18

**Remark on Protest**        ☐ The additional search fees were accompanied by the applicant's protest.

☐ No protest accompanied the payment of additional search fees.

Form PCT/ISA/210 (continuation of first sheet (2)) (January 2004)

**EP 1 765 020 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2927350 B